# EUROPÄISCHE PATENTANMELDUNG

(11) **EP 3 611 249 A1**
(43) Veröffentlichungstag der Anmeldung: **19.02.2020**
(21) Anmeldenummer: 19191718.6
(22) Anmeldetag: 14.08.2019
(51) Int. Cl.: C12C 7/20, C12C 7/165, C12C 3/12

(54) **VERBESSERUNG/OPTIMIERUNG DER HOPFENGABE IN EINEM WÜRZE- ODER BIERBEREITUNGSPROZESS**

(30) Priorität: 17.08.2018 DE 102018120140
(71) Anmelder: Ziemann Holvrieka GmbH, 71636 Ludwigsburg (DE)
(72) Erfinder: Bastgen, Nele, 71701 Schwieberdingen (DE)
(74) Vertreter: Kuhnen & Wacker Patent- und Rechtsanwaltsbüro PartG mbB

(57) **Zusammenfassung**

Die vorliegende Erfindung betrifft eine situative und adaptive Bestimmung/Vorhersage der Hopfengabe in einem Würze- oder Bierbereitungsprozess, welche die Menge, Art (Hopfung mit Naturhopfen, Hopfenpellets, Hopfenextrakt, Hopfenprodukt oder einer Kombination wenigstens zweier dieser), Zeitpunkt und Dosageform (Einzelgabe oder mehrere Teilgaben) der Hopfengabe einschließen kann. Dabei wird ein Parameter oder eine Kombination von Parametern zur Bestimmung der Hopfengabe berücksichtigt. Wesentlich hierbei ist, dass der der Bestimmung der Hopfengabe zu Grunde gelegte Parameter oder die der Bestimmung der Hopfengabe zu Grunde gelegte Kombination von Parametern gezielt ausgewählt wird, um eine (oder mehrere) technische Wirkung(en) zu erreichen. Der jeweilige Zusammenhang zwischen Parameter bzw. Parameterkombination und technischer Wirkung kann durch Vorversuche bestimmt werden und/oder kann bei sich wiederholender Bestimmung der Hopfengabe im Sinne einer "selbstlernenden Regelung/Steuerung" ermittelt und/oder präzisiert werden. Hierbei können auch individuelle, d.h., den jeweiligen Betreiber des Verfahrens betreffende, und saisonale Einflüsse berücksichtigt werden (z.B. jahrgangsbezogene Schwankungen der Rohstoffqualität). Dabei umfasst die Hopfengabe wenigstens einen der nachfolgend aufgeführten Kriterien oder Merkmale: Menge, Art und Zeitpunkt der Hopfengabe(n) und ob die Hopfengabe als eine einzige Gabe oder aufgeteilt in Teilgaben getätigt wird.

## Beschreibung

Die vorliegende Erfindung betrifft eine situative und adaptive Bestimmung/Vorhersage der Hopfengabe in einem Würze- oder Bierbereitungsprozess, welche die Menge, Art (Hopfung mit Naturhopfen, Hopfenpellets, Hopfenextrakt, Hopfenprodukt oder einer Kombination wenigstens zweier dieser), Zeitpunkt und Dosageform (Einzelgabe oder mehrere Teilgaben) der Hopfengabe einschließen kann. Dabei wird ein Parameter oder eine Kombination von Parametern zur Bestimmung der Hopfengabe berücksichtigt. Wesentlich hierbei ist, dass der der Bestimmung der Hopfengabe zu Grunde gelegte Parameter oder die der Bestimmung der Hopfengabe zu Grunde gelegte Kombination von Parametern gezielt ausgewählt wird, um eine (oder mehrere) technische Wirkung(en) zu erreichen. Der jeweilige Zusammenhang zwischen Parameter bzw. Parameterkombination und technischer Wirkung kann durch Vorversuche bestimmt werden und/oder kann bei sich wiederholender Bestimmung der Hopfengabe im Sinne einer "selbstlernenden Regelung/Steuerung" ermittelt und/oder präzisiert werden. Hierbei können auch individuelle, d.h., den jeweiligen Betreiber des Verfahrens betreffende, und saisonale Einflüsse berücksichtigt werden (z.B. jahrgangsbezogene Schwankungen der Rohstoffqualität). Dabei umfasst die Hopfengabe wenigstens einen, vorzugsweise alle, der nachfolgend aufgeführten Kriterien oder Merkmale: Menge, Art und Zeitpunkt der Hopfengabe(n) und ob die Hopfengabe als eine einzige Gabe oder aufgeteilt in Teilgaben getätigt wird.

Bei der Bestimmung der Hopfengabe oder der zu berücksichtigen Parameter können Algorithmen beispielsweise auf Basis von maschinellem Lernen, automatisiertem maschinellen Lernen, neuronalen Netzen, künstlicher Intelligenz, "deep learning", Fuzzy Logic, Maximum-Likelihood-Methode oder dergleichen eingesetzt werden. Erfindungsgemäß schließt der Begriff "Algorithmus" auch eine Analogie ein.

Aufgabe der vorliegenden Erfindung ist folglich eine Verbesserung oder Optimierung der Hopfengabe in einem Würze- oder Bierbereitungsprozess. Die Verwirklichung der Erfindung kann insbesondere zu einer Verbesserung der Ausbeute der Iso-α-Säuren und/oder der β-Säuren und/oder der Bittereinheiten in der resultierenden Würze oder im resultierenden Bier, einer verstärkten Abnahme der α-Säuren in der resultierenden Würze oder im resultierenden Bier, und/oder einer hohe/erhöhten Konzentration an Bitterstoffen/Bittereinheiten in der resultierenden Würze oder im resultierenden Bier führen. Ferner kann die Verwirklichung der Erfindung zu einer Verringerung der Hopfenverluste bei der Herstellung einer Würze oder eines Bieres führen.

Nachfolgend (teilweise gegliedert nach Nummern) ist die Offenbarung der Erfindung in weiterem Detail wiedergegeben. Die Erfindung ist jedoch nicht auf die angeführten Beispiele und Ausführungsformen beschränkt.

Die vorstehend beschriebene Aufgabe wird durch die erfindungsgemäßen Verfahren nach Anspruch 1 oder 2 bzw. den nachfolgenden Nummern 1 und 2 gelöst. Vorteilhafte Ausführungsformen sind Gegenstand der abhängigen Ansprüche 3 bis 7 bzw. der nachfolgenden Nummern 3 bis 7.

Erfindungsgemäß wird unter "Heißhalten" vorzugsweise ein Erwärmen der Würze auf und/oder Halten der Würze bei einer Temperatur von wenigstens 85 °C, insbesondere auf eine bzw. bei einer Temperatur zwischen 85 °C und der Kochtemperatur, verstanden. Erfindungsgemäß wird unter der Kochtemperatur vorzugsweise eine Temperatur verstanden, bei welcher die Würze das Sieden unter Blasenbildung beginnt. Somit wird erfindungsgemäß unter "Kochen" vorzugsweise ein Zustand der Würze verstanden, in dem die Würze eine Temperatur aufweist, welche der Kochtemperatur oder höher entspricht.
1. Verfahren zum Hopfen einer Würze oder eines Bieres, wenigstens mit den Schritten:
   (a) Bestimmen einer Hopfengabe,
      wobei die Hopfengabe wenigstens einen, vorzugsweise alle, der nachfolgend aufgeführten Kriterien oder Merkmale umfasst: Menge, Art und Zeitpunkt der Hopfengabe;
      wobei die Menge vorzugsweise in Masse der Hopfengabe pro Volumen der zu hopfenden Würze oder des zu hopfenden Bieres oder in Masse der in der Hopfengabe enthaltenen α-Säuren pro Volumen der zu hopfenden Würze oder des zu hopfenden Bieres ausgedrückt wird;
      wobei die Art der Hopfengabe wenigstens einen der folgenden einschließt: Naturhopfen, Doldenhopfen, Hopfenpellets (z.B. Hopfenpellets T45, Hopfenpellets T90), Hopfenextrakt (CO₂-Extrakt, Ethanolextrakt), Hopfenprodukte (z.B. reduzierte oder vorisomerisierte Hopfenprodukte);
      wobei sich der Zeitpunkt der Hopfengabe auf den Verlauf des Würze- oder Bierbereitungsprozesses bezieht;
      wobei bei der Bestimmung der Hopfengabe wenigstens einer der nachfolgend aufgeführten Parameter oder einer Kombinationen der nachfolgend aufgeführten Parameter berücksichtigt wird:
      - Parameter betreffend das zur Herstellung der Würze bzw. des Bieres verwendete Brauwasser: pH-Wert, Leitfähigkeit, Calcium, Calciumhärte, Magnesium, Magnesiumhärte, Carbonathärte, Nichtcarbonathärte, Gesamthärte, Restalkalität; und
      - Parameter betreffend das zur Herstellung der Würze bzw. des Bieres verwendete Malz: Viskosität, Wassergehalt, Extrakt Feinschrot lufttrocken, Extrakt Feinschrot Trockensubstanz, Friabilimeter mehlig, Friabilimeter ganzglasig, Würze pH, Verzuckerung, Hartong VZ T45°C, Eiweißgehalt; und
      - Parameter betreffend die zur Isomerisierung bzw. zur Hopfung vorgesehene Würze: pH-Wert, Stammwürzegehalt, Volumen (der Würze), Masse (des Hopfenproduktes), freier Amino-N, gesamtlöslicher N, koagulierbarer N, Magnesium, Calcium, Polyphenole, Verdampfungsziffer, Partikelgrößenverteilung (Medianwert), Feststoffgehalt, Partikelfracht, Trübung, Gesamtpolyphenole, magnesiumsulfatfällbarer Stickstoff; löslicher Stickstoff, (Gesamt-)Proteingehalt, , Kolbachzahl, Schrotsortierung, Thiobarbitursäurezahl (TBZ), Dimethylsulfid (DMS), Dimethylsulfid-Vorläufer (DMS-P), β-Glucan, Anthocyanogene, Zink, Oxalat, Mangan, Vorkoch-/Vorheißhaltezeit (Koch-/Heißhaltezeit vor der ersten Hopfenzugabe; erfindungsgemäß bedeutet die Abtrennung "/" allgemein "oder"), Kochzeit (Kochzeit ab der ersten Hopfenzugabe bis zum Ausschlagen), Heißhaltezeit (Heißhaltezeit ab der ersten Hopfenzugabe bis zum Ausschlagen);
      - Parameter betreffend das Läutersystem: Maischefilter oder Läuterbottich oder Drehscheibenfiltration (z.B. mittels Nessie-Technologie); ein Läutersystem in Kombination mit dem Mühlensystem (alle Arten von Mühlen, welche bei der Würze-, Bier- und Getränkeherstellung üblich sind);
      - Parameter betreffend das Würzeaufheizsystem: Innenkocher, Außenkocher, Heißhaltevorrichtung; Umpumpen beim Aufheizen auf dem Weg ins Kochgefäß, Zeit, Temperatur, Würzeparameter dabei: pH-Wert, Stammwürzgehalt, pH-Wert, Magnesium-Gehalt, Eiweißgehalt);
      - Parameter betreffend den zum Hopfen vorgesehenen Hopfen: Art des Hopfens, vorzugsweise Naturhopfen, Doldenhopfen, Hopfenpellets (z.B. Hopfenpellets T45, Hopfenpellets T90), Hopfenextrakt (CO₂-Extrakt, Ethanolextrakt), Hopfenprodukte (z.B. reduzierte oder vorisomerisierte Hopfenprodukte), α-Säure-Gehalt, Gehalt an Aromakomponenten, Ergebnisse von vorangegangenen Einzelanalysen, Lagerbedingungen; und
      - Parameter betreffend die Additive (Zugabemenge, Konzentration in der Würze oder im Bier und/oder Art): Entschäumer, Mineralsäure, Mineralsalze, Carbonsäuren, rohstoffeigene Additive, Zucker, Farbebier, Hopfenharze;
      - Parameter betreffend die Abtrennvorrichtung: Temperatur der Würze während der Klärung, Rastdauer, Klärungseffizienz/Feststoffgehalt der Würze nach der Klärung, Änderung der Partikelfracht/-messung, Hopfenzugabe während der Klärung.
      Bei den stoffbezogenen Parametern betreffend das Brauwasser, das Malz die Würze und die Additive (z.B. Magnesium im Brauwasser oder Eiweißgehalt in der Würze) handelt es sich um Konzentrationsangaben, bezogen auf das jeweils angegebene Medium (z.B. Magnesiumkonzentration im Brauwasser), falls nicht anders angegeben.
      Dabei kann auch eine beliebige Kombination von zwei, drei, vier, fünf, sechs oder mehr Parametern, ausgewählt aus den vorstehend aufgeführten Parametern, bei der Bestimmung der Hopfengabe berücksichtigt werden.
      Dabei wird der jeweilige Parameter vorzugsweise mit einer geeigneten Analysemethode, insbesondere nach der entsprechenden MEBAK- oder Analytika-EBC-Analysenmethode, bestimmt. Die Partikelgrößenverteilung (Median) kann beispielsweise mittels Laserbeugung, z.B. Coulter counter, gemessen werden.
   (b) Mischen der in Schritt (a) ermittelten Hopfengabe mit der zu hopfenden Würze oder dem zu hopfenden Bier, vorzugsweise Zugeben der in Schritt (a) ermittelten Hopfengabe zu der zu hopfenden Würze oder zu dem zu hopfenden Bier;
      wobei die Hopfengabe in einer einzigen Gabe oder in einer Mehrzahl von Teilgaben (vorzugsweise zwei, drei oder vier Teilgaben) erfolgen kann;
      wobei die Hopfengabe an einem einzigen Zugabepunkt oder an einer einzigen Stelle des Würze- oder Bierbereitungsprozesses erfolgen kann, wenn die Hopfengabe in einer einzigen Gabe erfolgt; oder
      wobei die Hopfengabe an mehreren Zugabepunkten oder an mehreren Stellen des Würze- oder Bierbereitungsprozesses oder an einem Zugabepunkt/einer Stelle des Würze- oder Bierbereitungsprozesses zeitlich beabstandet voneinander erfolgen kann, wenn die Hopfengabe in Teilgaben erfolgt; und
   (c) vorzugsweise Homogenisieren der in Schritt (b) erhaltenen Mischung.

Dabei kann optional vorgesehen sein, dass nur einer der vorstehend aufgeführten Parameter oder eine beliebige Kombination von zwei, drei, vier, fünf, sechs oder mehr der vorstehend aufgeführten Parameter bei der Bestimmung der Hopfengabe berücksichtigt wird, darüber hinaus jedoch kein weiterer Parameter.

Die vorstehend beschriebene Aufgabe wird ferner durch das nachfolgende Verfahren gelöst:
2. Verfahren zum Bestimmen einer Hopfengabe zum Hopfen einer Würze oder eines Bieres, wobei die Hopfengabe wenigstens einen, vorzugsweise alle, der nachfolgend aufgeführten Kriterien oder Merkmale umfasst: Menge, Art und Zeitpunkt der Hopfengabe;
wobei die Menge vorzugsweise in Masse der Hopfengabe pro Volumen der zu hopfenden Würze oder des zu hopfenden Bieres oder in Masse der in der Hopfengabe enthaltenen α-Säuren pro Volumen der zu hopfenden Würze oder des zu hopfenden Bieres ausgedrückt wird;
wobei die Art der Hopfengabe wenigstens einen der folgenden einschließt: Naturhopfen, Doldenhopfen, Hopfenpellets (z.B. Hopfenpellets 45, Hopfenpellets 90), Hopfenextrakt (CO₂-Extrakt, Ethanolextrakt), Hopfenprodukte (z.B. reduzierte oder vorisomerisierte Hopfenprodukte);
wobei sich der Zeitpunkt der Hopfengabe auf den Verlauf des Würze- oder Bierbereitungsprozesses bezieht;
wobei vorzugsweise die Hopfengabe in einer einzigen Gabe oder in einer Mehrzahl von Teilgaben (vorzugsweise zwei, drei oder vier Teilgaben) erfolgen kann; und
wobei vorzugsweise die Hopfengabe an einem einzigen Zugabepunkt oder an einer einzigen Stelle des Würze- oder Bierbereitungsprozesses erfolgen kann, wenn die Hopfengabe in einer einzigen Gabe erfolgt; oder
wobei vorzugsweise die Hopfengabe an mehreren Zugabepunkten oder an mehreren Stellen des Würze- oder Bierbereitungsprozesses oder an einem Zugabepunkt/einer Stelle des Würze- oder Bierbereitungsprozesses zeitlich beabstandet voneinander erfolgen kann, wenn die Hopfengabe in Teilgaben erfolgt;
wobei bei der Bestimmung der Hopfengabe wenigstens einer der nachfolgend aufgeführten Parameter oder eine Kombinationen der nachfolgend aufgeführten Parameter berücksichtigt wird:
- Parameter betreffend das zur Herstellung der Würze bzw. des Bieres verwendete Brauwasser: pH-Wert, Leitfähigkeit, Calcium, Calciumhärte, Magnesium, Magnesiumhärte, Carbonathärte, Nichtcarbonathärte, Gesamthärte, Restalkalität; und
- Parameter betreffend das zur Herstellung der Würze bzw. des Bieres verwendete Malz: Viskosität, Wassergehalt, Extrakt Feinschrot lufttrocken, Extrakt Feinschrot Trockensubstanz, Friabilimeter mehlig, Friabilimeter ganzglasig, Würze pH, Verzuckerung, Hartong VZ T45°C, Eiweißgehalt; und
- Parameter betreffend die zur Isomerisierung bzw. zur Hopfung vorgesehene Würze: pH-Wert, Stammwürzegehalt, Volumen (der Würze), Masse (des Hopfenproduktes), freier Amino-N, gesamtlöslicher N, koagulierbarer N, Magnesium, Calcium, Polyphenole, Verdampfungsziffer, Partikelgrößenverteilung (Medianwert), Feststoffgehalt, Partikelfracht, Trübung, Gesamtpolyphenole, magnesiumsulfatfällbarer Stickstoff; löslicher Stickstoff, (Gesamt-)Proteingehalt, , Kolbachzahl, Schrotsortierung, Thiobarbitursäurezahl (TBZ), Dimethylsulfid (DMS), Dimethylsulfid-Vorläufer (DMS-P), β-Glucan, Anthocyanogene, Zink, Oxalat, Mangan, Vorkoch-/Vorheißhaltezeit (Koch-/Heißhaltezeit vor der ersten Hopfenzugabe), Kochzeit (Kochzeit ab der ersten Hopfenzugabe bis zum Ausschlagen), Heißhaltezeit (Heißhaltezeit ab der ersten Hopfenzugabe bis zum Ausschlagen);
- Parameter betreffend das Läutersystem: Maischefilter oder Läuterbottich oder Drehscheibenfiltration; ein Läutersystem in Kombination mit dem Mühlensystem (alle Arten von Mühlen, welche bei der Würze-, Bier- und Getränkeherstellung üblich sind);
- Parameter betreffend das Würzeaufheizsystem: Innenkocher, Außenkocher, Heißhaltevorrichtung; Umpumpen beim Aufheizen auf dem Weg ins Kochgefäß, Zeit, Temperatur, Würzeparameter dabei: pH-Wert, Stammwürzgehalt, pH-Wert, Magnesium-Gehalt, Eiweißgehalt);
- Parameter betreffend den zum Hopfen vorgesehenen Hopfen: Art des Hopfens, vorzugsweise Naturhopfen, Doldenhopfen, Hopfenpellets (z.B. Hopfenpellets T45, Hopfenpellets T90), Hopfenextrakt (CO₂-Extrakt, Ethanolextrakt), Hopfenprodukte (z.B. reduzierte oder vorisomerisierte Hopfenprodukte), α-Säure-Gehalt, Gehalt an Aromakomponenten, Ergebnisse von vorangegangenen Einzelanalysen, Lagerbedingungen; und
- Parameter betreffend die Additive (Zugabemenge, Konzentration in der Würze oder im Bier und/oder Art): Entschäumer, Mineralsäure, Mineralsalze, Carbonsäuren, rohstoffeigene Additive, Zucker, Farbebier, Hopfenharze;
- Parameter betreffend die Abtrennvorrichtung: Temperatur der Würze während der Klärung, Rastdauer, Klärungseffizienz/Feststoffgehalt der Würze nach der Klärung, Änderung der Partikelfracht/-messung, Hopfenzugabe während der Klärung.

Bei den stoffbezogenen Parametern betreffend das Brauwasser, das Malz, die Würze und die Additive (z.B. Magnesium im Brauwasser oder Eiweißgehalt in der Würze) handelt es sich um Konzentrationsangaben, bezogen auf das jeweils angegebene Medium (z.B. Magnesiumkonzentration im Brauwasser), falls nicht anders angegeben.

Dabei kann auch eine beliebige Kombination von zwei, drei, vier, fünf, sechs oder mehr Parametern, ausgewählt aus den vorstehend aufgeführten Parametern, bei der Bestimmung der Hopfengabe berücksichtigt werden.

Dabei wird der jeweilige Parameter vorzugsweise mit einer geeigneten Analysemethode, insbesondere nach der entsprechenden MEBAK- oder Analytika-EBC-Analysenmethode, bestimmt. Die Partikelgrößenverteilung (Median) kann beispielsweise mittels Laserbeugung, z.B. Coulter counter, gemessen werden.

Dabei kann optional vorgesehen sein, dass die vorstehend aufgeführten (Einzel-) Parameter oder eine der vorstehend aufgeführten Kombinationen von Parametern bei der Bestimmung der Hopfengabe berücksichtigt wird, wobei jedoch darüber hinaus kein weiterer Parameter berücksichtigt wird.

Das erfindungsgemäße Verfahren nach den vorstehenden Nummern 1 oder 2 ermöglicht es, die Bestimmung der Hopfengabe und damit die Hopfung einer Würze oder eines Bieres zu verbessern und für den Benutzer zu vereinfachen. Insbesondere läßt sich durch die Auswahl eines geeigneten Parameters oder vorzugsweise einer geeigneten Kombination von Parametern und dessen bzw. deren Berücksichtigung bei der Bestimmung der Hopfengabe eine besonders geringe Konzentration der in der Würze bzw. im Bier verbleibenden α-Säuren, eine besonders hohe Konzentration der in der Würze bzw. im Bier entstehenden/enthaltenen/verbleibenden Iso-α-Säuren, eine besonders hohe Konzentration der in der Würze bzw. im Bier entstehenden/enthaltenen/verbleibenden β-Säuren, und eine hohe Konzentration an Bittereinheiten in der Würze bzw. im Bier erzielen. Hierdurch steigt die Effizienz der Hopfung und es wird eine höhere Bitterstoff-, aber auch Aromastoffausbeute erzielt. Zudem kann gegenüber der bisherigen, rein manuellen oder auf subjektiven Erfahrungen oder Wahrnehmungen des Benutzers basierenden Bestimmung der Hopfengabe die zur Erzielung einer gewünschten Wirkung (Bitterung/Aroma) eingesetzte Hopfenmenge insgesamt verringert werden.

Vorteilhafte Ausführungsformen der erfindungsgemäßen Verfahren sind Gegenstand der abhängigen Ansprüche bzw. der nachfolgenden Nummern 3 bis 7:
3. Verfahren nach vorstehender Nummer 1 oder 2, dadurch gekennzeichnet, dass bei der Bestimmung der Hopfengabe der nachfolgend aufgeführte Parameter oder eine der nachfolgend aufgeführten Kombinationen von Parametern berücksichtigt wird:
   - der pH-Wert der Würze und/oder des Bieres;
      oder
   - der pH-Wert der Würze und/oder des Bieres, und die Vorkochzeit/Vorheißhaltezeit/Kochzeit/Heißhaltezeit der Würze;
      oder
   - der pH-Wert der Würze und/oder des Bieres, und der Stammwürzegehalt der Würze;
      oder
   - der pH-Wert der Würze und/oder des Bieres, und die Vorkochzeit/Vorheißhaltezeit/Kochzeit/Heißhaltezeit der Würze; und der Stammwürzegehalt der Würze;
      oder
   - der pH-Wert der Würze und/oder des Bieres, und die Vorkochzeit/Vorheißhaltezeit/Kochzeit/Heißhaltezeit der Würze, und der Stammwürzegehalt der Würze; und die Magnesiumkonzentration der Würze.
   Optional kann vorgesehen sein, dass der vorstehend aufgeführte Parameter oder eine der vorstehend aufgeführten Kombinationen von Parametern bei der Bestimmung der Hopfengabe berücksichtigt wird, wobei jedoch darüber hinaus kein weiterer Parameter berücksichtigt wird.
   Optional kann vorgesehen sein, dass bei der Bestimmung der Hopfengabe eine Kombination aus dem vorstehend aufgeführten Parameter (pH-Wert der Würze und/oder des Bieres) oder einer der vorstehend aufgeführten Kombinationen von Parametern und der Temperatur berücksichtigt wird, welche die Würze während des Heißhaltens oder Kochens aufweist.
   Durch Berücksichtigung dieses Parameters bzw. einer dieser Kombinationen von Parametern wird eine besonders geringe Konzentration der in der Würze bzw. im Bier verbleibenden α-Säuren erzielt. Diese Wirkung ist umso stärker ausgeprägt, je mehr der vorstehend genannten Parameter bei der Bestimmung der Hopfengabe berücksichtigt werden.
   Dabei haben die Parameter in der nachfolgend wiedergegebenen Reihenfolge einen abnehmenden Einfluss auf die Konzentration der verbleibenden α-Säuren:
   - der pH-Wert der Würze und/oder des Bieres;
   - die Vorkochzeit/Vorheißhaltezeit/Kochzeit/Heißhaltezeit der Würze;
   - der Stammwürzegehalt der Würze;
   - die Magnesiumkonzentration der Würze.
4. Verfahren nach wenigstens einer der vorstehenden Nummern 1 bis 3, dadurch gekennzeichnet, dass bei der Bestimmung der Hopfengabe der nachfolgend aufgeführte Parameter oder eine der nachfolgend aufgeführten Kombinationen von Parametern berücksichtigt wird:
   - die α-Säure-Dosage zur Würze und/oder zum Bier;
      oder
   - die α-Säure-Dosage zur Würze und/oder zum Bier, und der Stammwürzegehalt der Würze;
      oder
   - die α-Säure-Dosage zur Würze und/oder zum Bier, und der Stammwürzegehalt der Würze; und der pH-Wert der Würze und/oder des Bieres;
      oder
   - die α-Säure-Dosage zur Würze und/oder zum Bier, und der Stammwürzegehalt der Würze; und der pH-Wert der Würze und/oder des Bieres, und die Vorkochzeit/Vorheißhaltezeit/Kochzeit/Heißhaltezeit der Würze.
   Optional kann vorgesehen sein, dass der vorstehend aufgeführte Parameter oder eine der vorstehend aufgeführten Kombinationen von Parametern bei der Bestimmung der Hopfengabe berücksichtigt wird, wobei jedoch darüber hinaus kein weiterer Parameter berücksichtigt wird.
   Optional kann vorgesehen sein, dass bei der Bestimmung der Hopfengabe eine Kombination aus dem vorstehend aufgeführten Parameter (α-Säure-Dosage zur Würze und/oder zum Bier) oder einer der vorstehend aufgeführten Kombinationen von Parametern und der Temperatur berücksichtigt wird, welche die Würze während des Heißhaltens oder Kochens aufweist.
   Durch Berücksichtigung dieses Parameters bzw. einer dieser Kombinationen von Parametern wird eine besonders hohe Konzentration der in der Würze bzw. im Bier entstehenden/enthaltenen/verbleibenden Iso-α-Säuren erzielt. Diese Wirkung ist umso stärker ausgeprägt, je mehr der vorstehend genannten Parameter bei der Bestimmung der Hopfengabe berücksichtigt werden.
   Dabei haben die Parameter in der nachfolgend wiedergegebenen Reihenfolge einen abnehmenden Einfluss auf die Konzentration der verbleibenden Iso-α-Säuren:
   - die α-Säure-Dosage zur Würze und/oder zum Bier;
   - der Stammwürzegehalt der Würze;
   - der pH-Wert der Würze und/oder des Bieres;
   - die Vorkochzeit/Vorheißhaltezeit/Kochzeit/Heißhaltezeit der Würze.
   Optional kann hierbei eine Berücksichtigung des Parameters der Magnesiumkonzentration in der Würze ausgeschlossen werden. Die Magnesiumkonzentration in der Würze hat keinen Einfluss auf die Konzentration der in der Würze bzw. im Bier verbleibenden Iso-α-Säuren.
5. Verfahren nach wenigstens einer der vorstehenden Nummern 1 bis 4, dadurch gekennzeichnet, dass bei der Bestimmung der Hopfengabe der nachfolgend aufgeführte Parameter oder eine der nachfolgend aufgeführten Kombinationen von Parametern berücksichtigt wird:
   - der pH-Wert der Würze und/oder des Bieres;
      oder
   - der pH-Wert der Würze und/oder des Bieres, und der Stammwürzegehalt der Würze.
   Optional kann vorgesehen sein, dass der vorstehend aufgeführte Parameter oder eine der vorstehend aufgeführten Kombinationen von Parametern bei der Bestimmung der Hopfengabe berücksichtigt wird, wobei jedoch darüber hinaus kein weiterer Parameter berücksichtigt wird.
   Optional kann vorgesehen sein, dass bei der Bestimmung der Hopfengabe eine Kombination aus dem vorstehend aufgeführten Parameter (pH-Wert der Würze und/oder des Bieres) oder einer der vorstehend aufgeführten Kombinationen von Parametern und der Temperatur berücksichtigt wird, welche die Würze während des Heißhaltens oder Kochens aufweist.
   Durch Berücksichtigung dieses Parameters bzw. dieser Kombinationen von Parametern wird eine besonders hohe Konzentration der in der Würze bzw. im Bier entstehenden/enthaltenen/verbleibenden β-Säuren erzielt. Diese Wirkung ist umso stärker ausgeprägt, je mehr der vorstehend genannten Parameter bei der Bestimmung der Hopfengabe berücksichtigt werden.
   Dabei haben die Parameter in der nachfolgend wiedergegebenen Reihenfolge einen abnehmenden Einfluss auf die Konzentration der verbleibenden β-Säuren:
   - der pH-Wert der Würze und/oder des Bieres;
   - der Stammwürzegehalt der Würze;
   - die Vorkochzeit/Vorheißhaltezeit/Kochzeit/Heißhaltezeit der Würze.
6. Verfahren nach wenigstens einer der vorstehenden Nummern 1 bis 5, dadurch gekennzeichnet, dass bei der Bestimmung der Hopfengabe der nachfolgend aufgeführte Parameter oder eine der nachfolgend aufgeführten Kombinationen von Parametern berücksichtigt wird:
   - die α-Säure-Dosage zur Würze und/oder zum Bier;
      oder
   - die α-Säure-Dosage zur Würze und/oder zum Bier, und der Stammwürzegehalt der Würze;
      oder
   - die α-Säure-Dosage zur Würze und/oder zum Bier, und der Stammwürzegehalt der Würze; und der pH-Wert der Würze und/oder des Bieres;
      oder
   - die α-Säure-Dosage zur Würze und/oder zum Bier, und der Stammwürzegehalt der Würze; und der pH-Wert der Würze und/oder des Bieres, und die Vorkochzeit/Vorheißhaltezeit/Kochzeit/Heißhaltezeit der Würze.
   Optional kann vorgesehen sein, dass der vorstehend aufgeführte Parameter oder eine der vorstehend aufgeführten Kombinationen von Parametern bei der Bestimmung der Hopfengabe berücksichtigt wird, wobei jedoch darüber hinaus kein weiterer Parameter berücksichtigt wird.
   Optional kann vorgesehen sein, dass bei der Bestimmung der Hopfengabe eine Kombination aus dem vorstehend aufgeführten Parameter (a-Säure-Dosage zur Würze und/oder zum Bier) oder einer der vorstehend aufgeführten Kombinationen von Parametern und der Temperatur berücksichtigt wird, welche die Würze während des Heißhaltens oder Kochens aufweist.
   Durch Berücksichtigung dieses Parameters bzw. einer dieser Kombinationen von Parametern wird eine hohe Konzentration an Bittereinheiten in der Würze bzw. im Bier erzielt, welche jedoch in Abhängigkeit vom Läutersystem und der entsprechenden Würzequalität (z.B. pH-Wert) geringer oder höher, zumeist jedoch geringer, ist als die Konzentration der Iso-α-Säuren. Diese Wirkung ist umso stärker ausgeprägt, je mehr der vorstehend genannten Parameter bei der Bestimmung der Hopfengabe berücksichtigt werden.
   Dabei haben die Parameter in der nachfolgend wiedergegebenen Reihenfolge einen abnehmenden Einfluss auf die Bittereinheiten in der Würze bzw. im Bier:
   - die α-Säure-Dosage zur Würze und/oder zum Bier;
   - der Stammwürzegehalt der Würze;
   - der pH-Wert der Würze und/oder des Bieres;
   - die Vorkochzeit/Vorheißhaltezeit/Kochzeit/Heißhaltezeit der Würze;
   - die Hopfenart/das Hopfenprodukt.
7. Verfahren nach wenigstens einer der vorstehenden Nummern 1 bis 6, dadurch gekennzeichnet, dass die Bestimmung der Hopfengabe gemäß Schritt (a) unter Einsatz von Algorithmen auf Basis von maschinellem Lernen, automatisiertem maschinellen Lernen, neuronalen Netzen, künstlicher Intelligenz, "deep learning", Fuzzy Logic, Case-based Reasoning (Fall-basiertes Schließen), Maximum-Likelihood-Methode, DDPG (deterministic policy gradient), A3C-LSTM (long-short term memory) oder dergleichen geschieht.
   Der Einsatz der vorstehend genannten Algorithmen verwirklicht ein Verfahren, dass in der Lage ist, die zur Verfügung stehende Parameter nach deren Bedeutung für die vorliegende Aufgabenstellung selbstständig zu beurteilen und entsprechende Auswahlen zu treffen. Dies kann trotz eines beschränkten Rechenaufwandes verwirklicht werden. Zudem erlaubt der Einsatz der vorstehend genannten Algorithmen, die bei früheren Rechenoperationen gewonnene Daten und Erkenntnisse bei der zukünftigen Abarbeitung der Algorithmen zu berücksichtigen und somit frühere "Erfahrungen" bei zukünftigen Berechnungen einfließen zu lassen (sog. selbstlernendes System). Hierdurch wird Präzision der Bestimmung der Hopfengabe erhöht und die Fehleranfälligkeit verringert.
   Die vorstehend beschriebene Aufgabe wird ferner durch die erfindungsgemäße Würze bzw. das erfindungsgemäße Bier nach Anspruch 8 bzw. der nachfolgenden Nummer 8 gelöst. Dabei gelten die vorstehend beschriebenen Vorteile der erfindungsgemäßen Verfahren analog.
8. Würze oder Bier, hergestellt nach dem Verfahren nach wenigstens einer der vorstehenden Nummern 1 bis 7.
   Die Erfindung wird ebenfalls durch die Verwendungen gemäß den Ansprüchen 9 bis 14 bzw. gemäß den nachfolgend aufgeführten Nummern 9 bis 14 verwirklicht, für die dieselben Vorteile wie für die vorstehend definierten Verfahren gelten.
9. Verwendung wenigstens einer der nachfolgend aufgeführten Parameter oder einer Kombinationen der nachfolgend aufgeführten Parameter bei der/zur Bestimmung einer Hopfengabe (in einem Verfahren) zum Hopfen einer Würze oder eines Bieres:
   - Parameter betreffend das zur Herstellung der Würze bzw. des Bieres verwendete Brauwasser: pH-Wert, Leitfähigkeit, Calcium, Calciumhärte, Magnesium, Magnesiumhärte, Carbonathärte, Nichtcarbonathärte, Gesamthärte, Restalkalität; und
   - Parameter betreffend das zur Herstellung der Würze bzw. des Bieres verwendete Malz: Viskosität, Wassergehalt, Extrakt Feinschrot lufttrocken, Extrakt Feinschrot Trockensubstanz, Friabilimeter mehlig, Friabilimeter ganzglasig, Würze pH, Verzuckerung, Hartong VZ T45°C, Eiweißgehalt; und
   - Parameter betreffend die zur Isomerisierung bzw. zur Hopfung vorgesehene Würze: pH-Wert, Stammwürzegehalt, Volumen (der Würze), Masse (des Hopfenproduktes), freier Amino-N, gesamtlöslicher N, koagulierbarer N, Magnesium, Calcium, Polyphenole, Verdampfungsziffer, Partikelgrößenverteilung (Medianwert), Feststoffgehalt, Partikelfracht, Trübung, Gesamtpolyphenole, magnesiumsulfatfällbarer Stickstoff; löslicher Stickstoff, (Gesamt-)Proteingehalt, , Kolbachzahl, Schrotsortierung, Thiobarbitursäurezahl (TBZ), Dimethylsulfid (DMS), Dimethylsulfid-Vorläufer (DMS-P), β-Glucan, Anthocyanogene, Zink, Oxalat, Mangan, Vorkoch-/Vorheißhaltezeit (Koch-/Heißhaltezeit vor der ersten Hopfenzugabe), Kochzeit (Kochzeit ab der ersten Hopfenzugabe bis zum Ausschlagen), Heißhaltezeit (Heißhaltezeit ab der ersten Hopfenzugabe bis zum Ausschlagen);
   - Parameter betreffend das Läutersystem: Maischefilter oder Läuterbottich oder Drehscheibenfiltration; ein Läutersystem in Kombination mit dem Mühlensystem (alle Arten von Mühlen, welche bei der Würze-, Bier- und Getränkeherstellung üblich sind);
   - Parameter betreffend das Würzeaufheizsystem: Innenkocher, Außenkocher, Heißhaltevorrichtung; Umpumpen beim Aufheizen auf dem Weg ins Kochgefäß, Zeit, Temperatur, Würzeparameter dabei: pH-Wert, Stammwürzgehalt, pH-Wert, Magnesium-Gehalt, Eiweißgehalt);
   - Parameter betreffend den zum Hopfen vorgesehenen Hopfen: Art des Hopfens, vorzugsweise Naturhopfen, Doldenhopfen, Hopfenpellets (z.B. Hopfenpellets T45, Hopfenpellets T90), Hopfenextrakt (CO₂-Extrakt, Ethanolextrakt), Hopfenprodukte (z.B. reduzierte oder vorisomerisierte Hopfenprodukte), α-Säure-Gehalt, Gehalt an Aromakomponenten, Ergebnisse von vorangegangenen Einzelanalysen, Lagerbedingungen; und
   - Parameter betreffend die Additive (Zugabemenge, Konzentration in der Würze oder im Bier und/oder Art): Entschäumer, Mineralsäure, Mineralsalze, Carbonsäuren, rohstoffeigene Additive, Zucker, Farbebier, Hopfenharze;
   - Parameter betreffend die Abtrennvorrichtung: Temperatur der Würze während der Klärung, Rastdauer, Klärungseffizienz/Feststoffgehalt der Würze nach der Klärung, Änderung der Partikelfracht/-messung, Hopfenzugabe während der Klärung.
   Bei den stoffbezogenen Parametern betreffend das Brauwasser, das Malz die Würze und die Additive (z.B. Magnesium im Brauwasser oder Eiweißgehalt in der Würze) handelt es sich um Konzentrationsangaben, bezogen auf das jeweils angegebene Medium (z.B. Magnesiumkonzentration im Brauwasser), falls nicht anders angegeben.
   Dabei kann auch eine beliebige Kombination von zwei, drei, vier, fünf, sechs oder mehr Parametern, ausgewählt aus den vorstehend aufgeführten Parametern, bei der Bestimmung der Hopfengabe berücksichtigt werden.
   Dabei wird der jeweilige Parameter vorzugsweise mit einer geeigneten Analysemethode, insbesondere nach der entsprechenden MEBAK- oder Analytika-EBC-Analysenmethode, bestimmt. Die Partikelgrößenverteilung (Median) kann beispielsweise mittels Laserbeugung, z.B. Coulter counter, gemessen werden.
   Dabei umfasst die Hopfengabe vorzugsweise wenigstens eines, vorzugsweise alle, der nachfolgend aufgeführten Kriterien oder Merkmale: Menge, Art und Zeitpunkt der Hopfengabe;
   wobei die Menge vorzugsweise in Masse der Hopfengabe pro Volumen der zu hopfenden Würze oder des zu hopfenden Bieres oder in Masse der in der Hopfengabe enthaltenen α-Säuren pro Volumen der zu hopfenden Würze oder des zu hopfenden Bieres ausgedrückt wird;
   wobei die Art der Hopfengabe wenigstens einen der folgenden einschließt: Naturhopfen, Doldenhopfen, Hopfenpellets (z.B. Hopfenpellets T45, Hopfenpellets T90), Hopfenextrakt (CO₂-Extrakt, Ethanolextrakt), Hopfenprodukte (z.B. reduzierte oder vorisomerisierte Hopfenprodukte); und
   wobei sich der Zeitpunkt der Hopfengabe auf den Verlauf des Würze- oder Bierbereitungsprozesses bezieht.
   Dabei kann optional vorgesehen sein, dass nur einer der vorstehend aufgeführten Parameter oder eine beliebige Kombination von zwei, drei, vier, fünf, sechs oder mehr der vorstehend aufgeführten Parameter bei der Bestimmung der Hopfengabe berücksichtigt wird, darüber hinaus jedoch kein weiterer Parameter.
10. Verwendung einer der nachfolgend aufgeführten Parameter oder einer nachfolgend aufgeführten Kombinationen von Parametern bei der/zur Bestimmung einer Hopfengabe (in einem Verfahren) zum Hopfen einer Würze oder eines Bieres:
   - der pH-Wert der Würze und/oder des Bieres;
      oder
   - der pH-Wert der Würze und/oder des Bieres, und die Vorkochzeit/Vorheißhaltezeit/Kochzeit/Heißhaltezeit der Würze;
      oder
   - der pH-Wert der Würze und/oder des Bieres, und der Stammwürzegehalt der Würze;
      oder
   - der pH-Wert der Würze und/oder des Bieres, und die Vorkochzeit/Vorheißhaltezeit/Kochzeit/Heißhaltezeit der Würze; und der Stammwürzegehalt der Würze;
      oder
   - der pH-Wert der Würze und/oder des Bieres, und die Vorkochzeit/Vorheißhaltezeit/Kochzeit/Heißhaltezeit der Würze, und der Stammwürzegehalt der Würze; und die Magnesiumkonzentration der Würze.
   Optional kann vorgesehen sein, dass der vorstehend aufgeführte Parameter oder eine der vorstehend aufgeführten Kombinationen von Parametern bei der Bestimmung der Hopfengabe berücksichtigt wird, wobei jedoch darüber hinaus kein weiterer Parameter berücksichtigt wird.
   Optional kann vorgesehen sein, dass bei der Bestimmung der Hopfengabe eine Kombination aus dem vorstehend aufgeführten Parameter (pH-Wert der Würze und/oder des Bieres) oder einer der vorstehend aufgeführten Kombinationen von Parametern und der Temperatur berücksichtigt wird, welche die Würze während des Heißhaltens oder Kochens aufweist.
   Durch Berücksichtigung dieses Parameters bzw. dieser Parameter wird eine besonders geringe Konzentration der in der Würze bzw. im Bier verbleibenden α-Säuren erzielt. Diese Wirkung ist umso stärker ausgeprägt, je mehr der vorstehend genannten Parameter bei der Bestimmung der Hopfengabe berücksichtigt werden.
   Dabei haben die Parameter in der nachfolgend wiedergegebenen Reihenfolge einen abnehmenden Einfluss auf die Konzentration der verbleibenden α-Säuren:
   - der pH-Wert der Würze und/oder des Bieres;
   - die Vorkochzeit/Vorheißhaltezeit/Kochzeit/Heißhaltezeit der Würze;
   - der Stammwürzegehalt der Würze;
   - die Magnesiumkonzentration der Würze.
11. Verwendung einer der nachfolgend aufgeführten Parameter oder einer nachfolgend aufgeführten Kombinationen von Parametern bei der/zur Bestimmung einer Hopfengabe (in einem Verfahren) zum Hopfen einer Würze oder eines Bieres:
   - die α-Säure-Dosage zur Würze und/oder zum Bier;
      oder
   - die α-Säure-Dosage zur Würze und/oder zum Bier, und der Stammwürzegehalt der Würze;
      oder
   - die α-Säure-Dosage zur Würze und/oder zum Bier, und der Stammwürzegehalt der Würze, und der pH-Wert der Würze und/oder des Bieres;
      oder
   - die α-Säure-Dosage zur Würze und/oder zum Bier, und der Stammwürzegehalt der Würze, und der pH-Wert der Würze und/oder des Bieres; und die Vorkochzeit/Vorheißhaltezeit/Kochzeit/Heißhaltezeit der Würze.
   Optional kann vorgesehen sein, dass der vorstehend aufgeführte Parameter oder eine der vorstehend aufgeführten Kombinationen von Parametern bei der Bestimmung der Hopfengabe berücksichtigt wird, wobei jedoch darüber hinaus kein weiterer Parameter berücksichtigt wird.
   Optional kann vorgesehen sein, dass bei der Bestimmung der Hopfengabe eine Kombination aus dem vorstehend aufgeführten Parameter (a-Säure-Dosage zur Würze und/oder zum Bier) oder einer der vorstehend aufgeführten Kombinationen von Parametern und der Temperatur berücksichtigt wird, welche die Würze während des Heißhaltens oder Kochens aufweist.
   Durch Berücksichtigung dieses Parameters bzw. einer dieser Kombinationen von Parametern wird eine besonders hohe Konzentration der in der Würze bzw. im Bier entstehenden/enthaltenen/verbleibenden Iso-α-Säuren erzielt. Diese Wirkung ist umso stärker ausgeprägt, je mehr der vorstehend genannten Parameter bei der Bestimmung der Hopfengabe berücksichtigt werden.
   Dabei haben die Parameter in der nachfolgend wiedergegebenen Reihenfolge einen abnehmenden Einfluss auf die Konzentration der verbleibenden Iso-α-Säuren:
   - die α-Säure-Dosage zur Würze und/oder zum Bier;
   - der Stammwürzegehalt der Würze;
   - der pH-Wert der Würze und/oder des Bieres;
   - die Vorkochzeit/Vorheißhaltezeit/Kochzeit/Heißhaltezeit der Würze.
   Optional kann hierbei eine Berücksichtigung des Parameters der Magnesiumkonzentration in der Würze ausgeschlossen werden. Die Magnesiumkonzentration in der Würze hat keinen Einfluss auf die Konzentration der in der Würze bzw. im Bier verbleibenden Iso-α-Säuren.
12. Verwendung des nachfolgend aufgeführten Parameters oder der nachfolgend aufgeführten Kombination von Parametern bei der/zur Bestimmung einer Hopfengabe (in einem Verfahren) zum Hopfen einer Würze oder eines Bieres:
   - der pH-Wert der Würze und/oder des Bieres;
      oder
   - der pH-Wert der Würze und/oder des Bieres; und der Stammwürzegehalt der Würze.
   Optional kann vorgesehen sein, dass der vorstehend aufgeführte Parameter oder eine der vorstehend aufgeführten Kombinationen von Parametern bei der Bestimmung der Hopfengabe berücksichtigt wird, wobei jedoch darüber hinaus kein weiterer Parameter berücksichtigt wird.
   Optional kann vorgesehen sein, dass bei der Bestimmung der Hopfengabe eine Kombination aus dem vorstehend aufgeführten Parameter (pH-Wert der Würze und/oder des Bieres) oder der vorstehend aufgeführten Kombination von Parametern und der Temperatur berücksichtigt wird, welche die Würze während des Heißhaltens oder Kochens aufweist.
   Durch Berücksichtigung dieses Parameters bzw. dieser Kombinationen von Parametern wird eine besonders hohe Konzentration der in der Würze bzw. im Bier entstehenden/enthaltenen/verbleibenden β-Säuren erzielt. Diese Wirkung ist umso stärker ausgeprägt, je mehr der vorstehend genannten Parameter bei der Bestimmung der Hopfengabe berücksichtigt werden.
   Dabei haben die Parameter in der nachfolgend wiedergegebenen Reihenfolge einen abnehmenden Einfluss auf die Konzentration der verbleibenden β-Säuren:
   - der pH-Wert der Würze und/oder des Bieres;
   - der Stammwürzegehalt der Würze;
   - die Vorkochzeit/Vorheißhaltezeit/Kochzeit/Heißhaltezeit der Würze.
13. Verwendung einer der nachfolgend aufgeführten Parameter oder einer nachfolgend aufgeführten Kombinationen von Parametern bei der/zur Bestimmung einer Hopfengabe (in einem Verfahren) zum Hopfen einer Würze oder eines Bieres:
   - die α-Säure-Dosage zur Würze und/oder zum Bier;
      oder
   - die α-Säure-Dosage zur Würze und/oder zum Bier, und der Stammwürzegehalt der Würze;
      oder
   - die α-Säure-Dosage zur Würze und/oder zum Bier, und der Stammwürzegehalt der Würze, und der pH-Wert der Würze und/oder des Bieres;
      oder
   - die α-Säure-Dosage zur Würze und/oder zum Bier, und der Stammwürzegehalt der Würze, und der pH-Wert der Würze und/oder des Bieres, und die Vorkochzeit/Vorheißhaltezeit/Kochzeit/Heißhaltezeit der Würze.
   Optional kann vorgesehen sein, dass der vorstehend aufgeführte Parameter oder eine der vorstehend aufgeführten Kombinationen von Parametern bei der Bestimmung der Hopfengabe berücksichtigt wird, wobei jedoch darüber hinaus kein weiterer Parameter berücksichtigt wird.
   Optional kann vorgesehen sein, dass bei der Bestimmung der Hopfengabe eine Kombination aus dem vorstehend aufgeführten Parameter (a-Säure-Dosage zur Würze und/oder zum Bier) oder einer der vorstehend aufgeführten Kombinationen von Parametern und der Temperatur berücksichtigt wird, welche die Würze während des Heißhaltens oder Kochens aufweist.
   Durch Berücksichtigung dieses Parameters bzw. einer dieser Kombinationen von Parametern wird eine hohe Konzentration an Bittereinheiten in der Würze bzw. im Bier erzielt, welche jedoch in Abhängigkeit vom Läutersystem und der entsprechenden Würzequalität (z.B. pH-Wert) geringer oder höher, zumeist jedoch geringer, ist als die Konzentration der Iso-α-Säuren. Diese Wirkung ist umso stärker ausgeprägt, je mehr der vorstehend genannten Parameter bei der Bestimmung der Hopfengabe berücksichtigt werden.
   Dabei haben die Parameter in der nachfolgend wiedergegebenen Reihenfolge einen abnehmenden Einfluss auf die Bittereinheiten in der Würze bzw. im Bier:
   - die α-Säure-Dosage zur Würze und/oder zum Bier;
   - der Stammwürzegehalt der Würze;
   - der pH-Wert der Würze und/oder des Bieres;
   - die Vorkochzeit/Vorheißhaltezeit/Kochzeit/Heißhaltezeit der Würze;
   - die Hopfenart/das Hopfenprodukt.
14. Verwendung von Algorithmen auf Basis von maschinellem Lernen, automatisiertem maschinellen Lernen, neuronalen Netzen, künstlicher Intelligenz, "deep learning", Fuzzy Logic, Case-based Reasoning (Fall-basiertes Schließen), Maximum-Likelihood-Methode, DDPG (deterministic policy gradient), A3C-LSTM (long-short term memory) oder dergleichen zur Bestimmung einer Hopfengabe unter Berücksichtigung wenigstens einer der nachfolgend aufgeführten Parameter oder einer Kombinationen der nachfolgend aufgeführten Parametern:
   - Parameter betreffend das zur Herstellung der Würze bzw. des Bieres verwendete Brauwasser: pH-Wert, Leitfähigkeit, Calcium, Calciumhärte, Magnesium, Magnesiumhärte, Carbonathärte, Nichtcarbonathärte, Gesamthärte, Restalkalität; und
   - Parameter betreffend das zur Herstellung der Würze bzw. des Bieres verwendete Malz: Viskosität, Wassergehalt, Extrakt Feinschrot lufttrocken, Extrakt Feinschrot Trockensubstanz, Friabilimeter mehlig, Friabilimeter ganzglasig, Würze pH, Verzuckerung, Hartong VZ T45°C, Eiweißgehalt; und
   - Parameter betreffend die zur Isomerisierung bzw. zur Hopfung vorgesehene Würze: pH-Wert, Stammwürzegehalt, Volumen (der Würze), Masse (des Hopfenproduktes), freier Amino-N, gesamtlöslicher N, koagulierbarer N, Magnesium, Calcium, Polyphenole, Verdampfungsziffer, Partikelgrößenverteilung (Medianwert), Feststoffgehalt, Partikelfracht, Trübung, Gesamtpolyphenole, magnesiumsulfatfällbarer Stickstoff; löslicher Stickstoff, (Gesamt-)Proteingehalt, Kolbachzahl, Schrotsortierung, Thiobarbitursäurezahl (TBZ), Dimethylsulfid (DMS), Dimethylsulfid-Vorläufer (DMS-P), β-Glucan, Anthocyanogene, Zink, Oxalat, Mangan, Vorkoch-/Vorheißhaltezeit (Koch-/Heißhaltezeit vor der ersten Hopfenzugabe), Kochzeit (Kochzeit ab der ersten Hopfenzugabe bis zum Ausschlagen), Heißhaltezeit (Heißhaltezeit ab der ersten Hopfenzugabe bis zum Ausschlagen);
   - Parameter betreffend das Läutersystem: Maischefilter oder Läuterbottich oder Drehscheibenfiltration; ein Läutersystem in Kombination mit dem Mühlensystem (alle Arten von Mühlen, welche bei der Würze- , Bier- und Getränkeherstellung üblich sind);
   - Parameter betreffend das Würzeaufheizsystem: Innenkocher, Außenkocher, Heißhaltevorrichtung; Umpumpen beim Aufheizen auf dem Weg ins Kochgefäß, Zeit, Temperatur, Würzeparameter dabei: pH-Wert, Stammwürzgehalt, pH-Wert, Mg-Gehalt, Eiweißgehalt);
   - Parameter betreffend den zum Hopfen vorgesehenen Hopfen: Art des Hopfens, vorzugsweise Naturhopfen, Doldenhopfen, Hopfenpellets (z.B. Hopfenpellets T45, Hopfenpellets T90), Hopfenextrakt (CO₂-Extrakt, Ethanolextrakt), Hopfenprodukte (z.B. reduzierte oder vorisomerisierte Hopfenprodukte), α-Säure-Gehalt, Gehalt an Aromakomponenten, Ergebnisse von vorangegangenen Einzelanalysen, Lagerbedingungen; und
   - Parameter betreffend die Additive (Zugabemenge, Konzentration in der Würze oder im Bier und/oder Art): Entschäumer, Mineralsäure, Mineralsalze, Carbonsäuren, rohstoffeigene Additive, Zucker, Farbebier, Hopfenharze;
   - Parameter betreffend die Abtrennvorrichtung: Temperatur der Würze während der Klärung, Rastdauer, Klärungseffizienz/Feststoffgehalt der Würze nach der Klärung, Änderung der Partikelfracht/-messung, Hopfenzugabe während der Klärung.
   Bei den stoffbezogenen Parametern betreffend das Brauwasser, das Malz die Würze und die Additive (z.B. Magnesium im Brauwasser oder Eiweißgehalt in der Würze) handelt es sich um Konzentrationsangaben, bezogen auf das jeweils angegebene Medium (z.B. Magnesiumkonzentration im Brauwasser), falls nicht anders angegeben.
   Dabei kann auch eine beliebige Kombination von zwei, drei, vier, fünf, sechs oder mehr Parametern, ausgewählt aus den vorstehend aufgeführten Parametern, bei der Bestimmung der Hopfengabe berücksichtigt werden. Optional kann vorgesehen sein, dass nur einer der vorstehend aufgeführten Parameter oder eine beliebige Kombination von zwei, drei, vier, fünf, sechs oder mehr der vorstehend aufgeführten Parameter bei der Bestimmung der Hopfengabe berücksichtigt wird, wobei jedoch darüber hinaus kein weiterer Parameter berücksichtigt wird.
   Dabei wird der jeweilige Parameter vorzugsweise mit einer geeigneten Analysemethode, insbesondere nach der entsprechenden MEBAK- oder Analytika-EBC-Analysenmethode, bestimmt. Die Partikelgrößenverteilung (Median) kann beispielsweise mittels Laserbeugung, z.B. Coulter counter, gemessen werden.
   Dabei umfasst die Hopfengabe vorzugsweise wenigstens eines, vorzugsweise alle, der nachfolgend aufgeführten Kriterien oder Merkmale: Menge, Art und Zeitpunkt der Hopfengabe;
   wobei die Menge vorzugsweise in Masse der Hopfengabe pro Volumen der zu hopfenden Würze oder des zu hopfenden Bieres oder in Masse der in der Hopfengabe enthaltenen α-Säuren pro Volumen der zu hopfenden Würze oder des zu hopfenden Bieres ausgedrückt wird;
   wobei die Art der Hopfengabe wenigstens einen der folgenden einschließt: Naturhopfen, Doldenhopfen, Hopfenpellets (z.B. Hopfenpellets T45, Hopfenpellets T90), Hopfenextrakt (CO₂-Extrakt, Ethanolextrakt), Hopfenprodukte (z.B. reduzierte oder vorisomerisierte Hopfenprodukte); und
   wobei sich der Zeitpunkt der Hopfengabe auf den Verlauf des Würze- oder Bierbereitungsprozesses bezieht.
   Die Erfindung umfasst auch eine Steuer- oder Regelvorrichtung, welche geeignet ist, die Hopfengabe auf Basis der erfassten Parameter zu bestimmen und auszugeben. Die Vorteile der erfindungsgemäßen Steuer- oder Regelvorrichtung sind identisch mit denen des erfindungsgemäßen Verfahrens und der erfindungsgemäßen Verwendungen.
   Die Erfindung wird ebenfalls durch die Steuer- oder Regelvorrichtung gemäß den Ansprüchen 15 bis 18 bzw. gemäß den nachfolgend aufgeführten Nummern 15 bis 18 verwirklicht, für die dieselben Vorteile wie für die vorstehend definierten Verfahren gelten.
15. Steuer- oder Regelvorrichtung (S), aufweisend:
   wenigstens eine Erfassungseinrichtung (E) zum Erfassen wenigstens eines der nachfolgend aufgeführten Parameter:
      - Parameter betreffend das zur Herstellung der Würze bzw. des Bieres verwendete Brauwasser: pH-Wert, Leitfähigkeit, Calcium, Calciumhärte, Magnesium, Magnesiumhärte, Carbonathärte, Nichtcarbonathärte, Gesamthärte, Restalkalität; und
      - Parameter betreffend das zur Herstellung der Würze bzw. des Bieres verwendete Malz: Viskosität, Wassergehalt, Extrakt Feinschrot lufttrocken, Extrakt Feinschrot Trockensubstanz, Friabilimeter mehlig, Friabilimeter ganzglasig, Würze pH, Verzuckerung, Hartong VZ T45°C, Eiweißgehalt; und
      - Parameter betreffend die zur Isomerisierung bzw. zur Hopfung vorgesehene Würze: pH-Wert, Stammwürzegehalt, Volumen (der Würze), Masse (Masse des Hopfenproduktes), freier Amino-N, gesamtlöslicher N, koagulierbarer N, Magnesium, Calcium, Polyphenole, Verdampfungsziffer, Partikelgrößenverteilung (Medianwert), Feststoffgehalt, Partikelfracht, Trübung, Gesamtpolyphenole, magnesiumsulfatfällbarer Stickstoff; löslicher Stickstoff, (Gesamt-)Proteingehalt, , Kolbachzahl, Schrotsortierung, Thiobarbitursäurezahl (TBZ), Dimethylsulfid (DMS), Dimethylsulfid-Vorläufer (DMS-P), β-Glucan, Anthocyanogene, Zink, Oxalat, Mangan, Vorkoch-/Vorheißhaltezeit (Koch-/Heißhaltezeit vor der ersten Hopfenzugabe), Kochzeit (Kochzeit ab der ersten Hopfenzugabe bis zum Ausschlagen), Heißhaltezeit (Heißhaltezeit ab der ersten Hopfenzugabe bis zum Ausschlagen);
      - Parameter betreffend das Läutersystem: Maischefilter oder Läuterbottich oder Drehscheibenfiltration; ein Läutersystem in Kombination mit dem Mühlensystem (alle Arten von Mühlen, welche bei der Würze- , Bier- und Getränkeherstellung üblich sind);
      - Parameter betreffend das Würzeaufheizsystem: Innenkocher, Außenkocher, Heißhaltevorrichtung; Umpumpen beim Aufheizen auf dem Weg ins Kochgefäß, Zeit, Temperatur, Würzeparameter dabei: pH-Wert, Stammwürzgehalt, pH-Wert, Magnesium-Gehalt, Eiweißgehalt);
      - Parameter betreffend den zum Hopfen vorgesehenen Hopfen: Art des Hopfens, vorzugsweise Naturhopfen, Doldenhopfen, Hopfenpellets (z.B. Hopfenpellets T45, Hopfenpellets T90), Hopfenextrakt (CO₂-Extrakt, Ethanolextrakt), Hopfenprodukte (z.B. reduzierte oder vorisomerisierte Hopfenprodukte), α-Säure-Gehalt, Gehalt an Aromakomponenten, Ergebnisse von vorangegangenen Einzelanalysen, Lagerbedingungen; und
      - Parameter betreffend die Additive (Zugabemenge, Konzentration in der Würze oder im Bier und/oder Art): Entschäumer, Mineralsäure, Mineralsalze, Carbonsäuren, rohstoffeigene Additive, Zucker, Farbebier, Hopfenharze;
      - Parameter betreffend die Abtrennvorrichtung: Temperatur der Würze während der Klärung, Rastdauer, Klärungseffizienz/Feststoffgehalt der Würze nach der Klärung, Änderung der Partikelfracht/-messung, Hopfenzugabe während der Klärung;
   wenigstens eine Recheneinrichtung (C), welche hergerichtet, konfiguriert oder geeignet ist, die Hopfengabe unter Berücksichtigung des wenigstens einen Parameters, welcher mittels der Erfassungseinrichtung (E) erfasst worden ist, unter Einsatz von Algorithmen auf Basis von maschinellem Lernen, automatisiertem maschinellen Lernen, neuronalen Netzen, künstlicher Intelligenz, "deep learning", Fuzzy Logic, Case-based Reasoning (Fall-basiertes Schließen), Maximum-Likelihood-Methode, DDPG (deterministic policy gradient), A3C-LSTM (long-short term memory) oder dergleichen zu bestimmen; und
   vorzugsweise wenigstens eine Ausgabeeinrichtung (A), welche hergerichtet, konfiguriert oder geeignet ist, die von der Recheneinrichtung (C) bestimmte Hopfengabe an einen Nutzer und/oder an ein technisches System, wie beispielsweise eine Sudhaussteuerung oder eine Brauanlage, auszugeben.
   Bei den stoffbezogenen Parametern betreffend das Brauwasser, das Malz die Würze und die Additive (z.B. Magnesium im Brauwasser oder Eiweißgehalt in der Würze) handelt es sich um Konzentrationsangaben, bezogen auf das jeweils angegebene Medium (z.B. Magnesiumkonzentration im Brauwasser), falls nicht anders angegeben.
   Dabei kann optional vorgesehen sein, dass nur einer der vorstehend aufgeführten Parameter oder eine beliebige Kombination von zwei, drei, vier, fünf, sechs oder mehr der vorstehend aufgeführten Parameter bei der Bestimmung der Hopfengabe berücksichtigt wird, wobei jedoch darüber hinaus kein weiterer Parameter berücksichtigt wird.
   Dabei umfasst die Hopfengabe vorzugsweise wenigstens eines, vorzugsweise alle, der nachfolgend aufgeführten Kriterien oder Merkmale: Menge, Art und Zeitpunkt der Hopfengabe;
   wobei die Menge vorzugsweise in Masse der Hopfengabe pro Volumen der zu hopfenden Würze oder des zu hopfenden Bieres oder in Masse der in der Hopfengabe enthaltenen α-Säuren pro Volumen der zu hopfenden Würze oder des zu hopfenden Bieres ausgedrückt wird;
   wobei die Art der Hopfengabe wenigstens einen der folgenden einschließt: Naturhopfen, Doldenhopfen, Hopfenpellets (z.B. Hopfenpellets T45, Hopfenpellets T90), Hopfenextrakt (CO₂-Extrakt, Ethanolextrakt), Hopfenprodukte (z.B. reduzierte oder vorisomerisierte Hopfenprodukte); und
   wobei sich der Zeitpunkt der Hopfengabe auf den Verlauf des Würze- oder Bierbereitungsprozesses bezieht.
16. Steuer- oder Regelvorrichtung (S) nach vorstehender Nummer 15, dadurch gekennzeichnet, dass die Recheneinrichtung (C) hergerichtet, konfiguriert oder geeignet ist, die Hopfengabe unter Berücksichtigung eines der nachfolgend aufgeführten Parameter oder einer der nachfolgend aufgeführten Kombinationen von Parametern zu bestimmen:
   - der pH-Wert der Würze und/oder des Bieres;
      oder
   - der pH-Wert der Würze und/oder des Bieres, und die Kochzeit/Heißhaltezeit der Würze;
      oder
   - der pH-Wert der Würze und/oder des Bieres, und der Stammwürzegehalt der Würze;
      oder
   - der pH-Wert der Würze und/oder des Bieres, und die Kochzeit/Heißhaltezeit der Würze, und der Stammwürzegehalt der Würze;
      oder
   - der pH-Wert der Würze und/oder des Bieres, und die Kochzeit/Heißhaltezeit der Würze, und der Stammwürzegehalt der Würze, und die Magnesiumkonzentration der Würze;
      oder
   - die α-Säure-Dosage zur Würze und/oder zum Bier;
      oder
   - die α-Säure-Dosage zur Würze und/oder zum Bier, und der Stammwürzegehalt der Würze;
      oder
   - die α-Säure-Dosage zur Würze und/oder zum Bier, und der Stammwürzegehalt der Würze, und der pH-Wert der Würze und/oder des Bieres;
      oder
   - die α-Säure-Dosage zur Würze und/oder zum Bier, und der Stammwürzegehalt der Würze, und der pH-Wert der Würze und/oder des Bieres, und die Kochzeit/Heißhaltezeit der Würze;
      oder
   - der pH-Wert der Würze und/oder des Bieres, und der Stammwürzegehalt der Würze.
   Dabei kann optional vorgesehen sein, dass die vorstehend aufgeführten (Einzel-) Parameter oder eine der vorstehend aufgeführten Kombinationen von Parametern bei der Bestimmung der Hopfengabe berücksichtigt wird, wobei jedoch darüber hinaus kein weiterer Parameter berücksichtigt wird.
   Optional kann vorgesehen sein, dass bei der Bestimmung der Hopfengabe eine Kombination aus den vorstehend aufgeführten Parametern (pH-Wert der Würze und/oder des Bieres, oder α-Säure-Dosage zur Würze und/oder zum Bier) oder einer der vorstehend aufgeführten Kombinationen von Parametern und der Temperatur berücksichtigt wird, welche die Würze während des Heißhaltens oder Kochens aufweist.
   Die Vorteile bzw. Wirkungen, die mit den einzelnen Parametern und Kombinationen von Parametern verbunden sind, sind identisch mit den in Zusammenhang mit dem erfindungsgemäßen Verfahren aufgeführten, einem Parameter oder einer Kombination von Parametern zugeordneten Vorteilen.
17. Steuer- oder Regelvorrichtung (S) nach wenigstens einer der vorstehenden Nummern 15 und 16, dadurch gekennzeichnet, dass die Steuer- oder Regelvorrichtung (S) ferner eine Datenbank (B) aufweist,
   wobei die Datenbank (B) zum Sammeln und Speichern von Daten geeignet ist; und/oder
   dass die Steuer- oder Regelvorrichtung (S) ein selbstlernendes System ist; und/oder
   dass die Steuer- oder Regelvorrichtung (S) geeignet ist, zu einem früheren Zeitpunkt erfasste, bestimmte und/oder ausgegebene Daten bei der Bestimmung der Hopfengabe zu berücksichtigen.
18. Steuer- oder Regelvorrichtung (S), vorzugsweise nach wenigstens einer der vorstehenden Nummern 15 bis 17, hergerichtet oder geeignet zur Durchführung des Verfahrens nach einer der vorstehenden Nummern 1 bis 7.

### Weitere Offenbarung der Erfindung

Einflussfaktoren auf die in der Würze verbleibenden, in der Würze gelösten α-Säuren (in absteigender Reihenfolge):
- pH-Wert der Würze (wegen Löslichkeitsverhalten der α-Säuren);
- Vorkoch-/Vorheißhaltezeit/Kochzeit/Heißhaltezeit der Würze;
- Stammwürzegehalt der Würze;
- Magnesiumkonzentration der Würze (z.B. als MgO-Zugabe; Mg ist Katalysator für die Isomerisierungsreaktion der Humolone);
- α-Säure-Dosage zur Würze.

Einflussfaktoren auf die in der Würze entstehenden/enthaltenen Iso-α-Säuren (in absteigender Reihenfolge):
- α-Säure-Dosage zur Würze;
- Stammwürzegehalt der Würze;
- pH-Wert der Würze (wegen Löslichkeitsverhalten der Iso-α-Säuren: höhere Löslichkeit bei höherem pH);
- Vorkoch-/Vorheißhaltezeit/Kochzeit/Heißhaltezeit der Würze;
- kein Einfluß: Magnesiumkonzentration der Würze.

Einflussfaktoren auf die in der Würze entstehenden/enthaltenen β-Säuren (in absteigender Reihenfolge):
- pH-Wert der Würze (wegen Löslichkeitsverhalten der β-Säuren: höhere Löslichkeit bei höherem pH);
- Stammwürzegehalt der Würze;
- [α-Säure-Dosage zur Würze; Kochzeit/Heißhaltezeit der Würze, Magnesiumkonzentration der Würze]

Einflussfaktoren auf die Bittereinheiten der Würze:
Die Würzezusammensetzung bestimmt die Menge der gelösten Bitterbegleitstoffe in der Würze sowie die Umwandlung während des Kochens. Die Hopfenprodukte spielen eine große Rolle, da je nach Sorte mehr oder weniger Bitterbegleitstoffe in die Würze eingebracht werden, sodass die Bittereinheiten höher oder niedriger ausfallen. Hinzu kommen die Stoffe, die mit der Methode der Bittereinheiten-Bestimmung nicht erfasst werden.

Parameter, welche erfindungsgemäß bei der Bestimmung der Hopfengabe berücksichtigt werden können, auch in beliebiger Kombination der zwei oder mehrerer der Parameter:

| Parameter | Einheit |
|---|---|
| pH-Wert | - |
| Leitfähigkeit | µs/cm |
| Calcium | mg/l |
| Calciumhärte | °dH |
| Magnesium | mg/l |
| Magnesiumhärte | °dH |
| Carbonathärte | °dH |
| Carbonathärte | mmol/l |
| Nichtcarbonathärte | °dH |
| Nichtcarbonathärte | mmol/l |
| Gesamthärte | °dH |
| Gesamthärte | mmol/l |
| Restalkalitiät | °dH |

| Malz | |
|---|---|
| Parameter | Einheit |
| Viskosität ber. 8,6°P | mPas |
| Viskosität ber. 12,0°P | mPas |
| Wassergehalt | % |
| Extrakt Feinschrot Iftr. | % |
| Extrakt feinschrot TrS. | % |
| Friabilimeter mehlig | % |
| Friabilimeter ganzglasig | % |
| Würze pH | |
| Verzuckerung | min |
| Hartonq VZ 45°C | % |
| Eiweißgehalt | % |
| Löslich-N | mg/100g |
| Kolbachzahl | % |
| Schrotsortierung | |

| Isomerisierungs-Würze | |
|---|---|
| Parameter | Einheit |
| pH-Wert | - |
| Stammwürze | Gew.% |
| Stammwürze | Gew/Vol.% |
| Gesamt Protein | g/100ml |
| freier Amino-N | mg/100ml |
| gesamtlösl. N | mg/100ml |
| koag. N | mg/100ml |
| Mg-SO₄ fällbarer N | mg/l |
| Fettsäuren | mg/kg |
| Magnesium | mg/l |
| Calcium | mg/l |
| Eisen | mg/l |
| Polyphenole | mg/l |
| Partikelgrößenverteilung (Median) | µm |
| Feststoffe | mg/l |
| Trübung | EBC |
| Menge | I |
| Verdampfungsziffer | - |
| Behandlung der Isomerisierungswürze | |
| Kalthopfung | |
| Kochtemperatur der Würze Heißhaltetemeratur der Würze | °C |

| Hopfenprodukt |
|---|
| |
| Pellets Typ 45 |
| Pellets Typ 90 |
| CO₂-Extrakt |
| Ethanolextrakt |
| isomerisierte Hopfenprodukte (Isopellets, Kettle-Extrakte, isomerisierter Extrakt) |
| Doldenhopfen |
| Hopfenalter |

| Additive |
|---|
| |
| Entschäumer |
| Mineralsäuren |
| Mineralsalze |
| Carbonsäuren |
| rohstoffeigene Additive |
| Zucker |
| Farbebier |
| Hopfenharze |
| Gallotannine |
| Enzyme |

Beim erfindungsgemäßen Verfahren, bei den erfindungsgemäßen Verwendungen und bei der erfindungsgemäßen Steuer- oder Regelvorrichtung (S) gemäß den vorstehenden Nummern kann ferner eine manuelle Korrekturmöglichkeit der Hopfengabe vorgesehen sein. Hierdurch kann der Benutzer manuell die Hopfengabe nach seinen individuellen Wünschen oder Bedürfnissen anpassen. Beispielsweise kann die Menge, der Zeitpunkt, die Art und/oder Teilung der Hopfengabe manuell angepasst werden.

### Experimenteller Teil 1

Die aus dem neuartigen und dynamischen Maischefiltrationssystem resultierenden Würzefraktionen erleichtern die individuelle Hopfenisomerisierung und ermöglichen eine Reduzierung der Hopfenverluste durch eine fraktionierte, kundenspezifische Würzekochung. Um den Einfluss der unterschiedlichen Qualitäten der Würzeströme auf die Hopfenisomerisierung zu untersuchen, wurde ein Screening-Experiment im Labormaßstab mittels statistischer Versuchsplanung ("Design of Experiments") durchgeführt. Die Parameter pH-Wert (pH 5,6, 7,0), Stammwürze (17,0, 2,0 °P), Kochzeit (60, 120 min), Dosiermenge an α-Säuren (60, 120 mg/l) wurden sowohl an das neuartige System als auch an die konventionellen Sudhausstandards angepasst. Die Kochtemperatur und der Hopfen wurden festgelegt. Zur Bestimmung der Isomerisierungsrate wurden die α-Säuren und iso-α-Säuren in der gekochten Würze analysiert.

Die Ergebnisse zeigen einen signifikanten Einfluss aller variierten Parameter auf die Isomerisierung. Weiterhin zeigt sich eine Abhängigkeit der Stammwürze und hoher pH-Werte auf den α-Säurengehalt. Die Werte der iso-α-Säuren zeigen bei einem pH-Wert von 7,0, trotz Variieren der Stammwürze und der Dosierung der α-Säuren, keinen erkennbaren Unterschied zwischen einer Kochzeit von 60 min und 120 min. Daher hat die Kochzeit bei einem vorherrschenden Würze pH-Wert von 5,6 einen größeren Einfluss auf die Isomerisierungsrate als bei pH-Wert 7,0 aufgrund der höheren Löslichkeit von α-Säuren bei pH 7,0.

Die Kenntnis über die Würzezusammensetzung ermöglicht eine optimale Einstellung der Kochzeit und der α-Säuren-Dosage hinsichtlich der Hopfenisomerisierungsrate. Dieses Wissen kann auch auf ein konventionelles Sudhaus übertragen werden, damit die Hopfen- und Energiekosten reduziert werden können.

Das neuartige Maischefiltrationssystem erzeugt vier parallele Würzeströme mit unterschiedlichen Eigenschaften. Dies ermöglicht eine optimierte Nutzung der Würzeströme in den nachgelagerten Prozessschritten eines Sudhauses. Daher wurde ein Screening-Experiment zur Hopfenisomerisierung mit verschiedenen Würzeparametern außerhalb des konventionellen Sudhausbereichs im Labormaßstab durchgeführt. Auf Basis von zuvor durchgeführten industriellen Feldversuchen wurden die Schlüsselparameter (Minimum und Maximum) der Würzefraktionen des Labormaßstabs, die den Filtermodulen 1 und 4 entsprechen, auf den pH-Wert (pH 5,6 bzw. 7,0) und die Stammwürze (17,0 bzw. 2,0°P) entsprechend angepasst. Die Parameter Kochzeit und Dosiermenge von α-Säuren wurden an die konventionellen Sudhausstandards und an das neue System angepasst. Zusätzlich wurde getestet, welchen Einfluss eine Magnesiumzugabe zur Würze auf die Isomerisierungsrate hat. Die Ergebnisse zeigen, dass die Kochzeit bei einem pH-Wert von 5,6 die Menge der iso-α-Säuren stärker beeinflusst als bei Würzen mit einem pH-Wert von 7,0. Selbst bei einem hohen Stammwürzegehalt von 17,0°P, hat eine Verlängerung der Kochzeit keinen wesentlichen Einfluss auf die Isomerisierungsrate.

### Einleitung

Der Charakter von Bier wird maßgeblich durch Hopfen beeinflusst, der sich aus einem hohen Gehalt an Sekundärmetaboliten, wie ätherischen Ölen oder Polyphenolen, zusammensetzt. Die größten erkennbaren Auswirkungen haben die Bitterstoffe, insbesondere die isomerisierten α-Säuren. Sie verleihen dem Bier seine typische bittere Geschmacksnote, fördern und stabilisieren den Bierschaum und wirken als natürliches Konservierungsmittel. Um diese Vorteile nutzen zu können, benötigt man Wärmeenergie. Hierdurch verändern sich die optisch aktiven hexazyklischen Verbindungen der α-Säuren in eine Fünferring-Struktur. Diese Reaktion hängt von Faktoren wie dem pH-Wert, der Stammwürze, den Kochbedingungen, dem Hopfenprodukt und dessen Dosierung sowie von der Würzezusammensetzung ab.

Insbesondere der empfohlene pH-Wert von 5,2 in der Pfannevoll-Würze begrenzt die Löslichkeit der α-Säuren. Dies ist jedoch der optimale pH-Wert für die Proteinkoagulation. Die eingeschränkte Löslichkeit von α-Säuren in Wasser steigt von 40 mg/L bei einem pH-Wert von 5,0 auf 480 mg/L bei einem pH-Wert von 5,9, also auf das Zwölffache an. Iso-α-Säuren haben höhere Löslichkeitsgrenzen: 2.000 mg/L bei einem pH-Wert von 5. Ein pH-Wert zwischen 4,8 und 6,0 hat keinen Einfluss auf die eigentliche Isomerisierungsreaktion, nur die Löslichkeit der α-Säuren steigt mit steigendem pH-Wert. Weitere Verluste können durch eine unvollständige Isomerisierung und durch den Trub verursacht werden, was zu Verlusten aufgrund ionischer Wechselwirkungen oder hinsichtlich koagulierter Proteine führt. Je höher die Stammwürze ist, desto höher sind Proteinkoagulation und Trubbildung sowie die Verluste an Bittersäuren. Vom Ausgangsprodukt bis zur Kaltwürze gehen insgesamt 50 Prozent verloren. Darüber hinaus treten im Kaltbereich weitere Verluste auf.

Gemäß der vorliegenden Erfindung wird die Hopfenisomerisierung über den konventionellen Würzeparameterbereich hinaus betrachtet. Durch das neue kontinuierliche Maischefiltrationssystem, welches vier Würzeströme mit unterschiedlichen Eigenschaften erzeugt, ergeben sich neue Möglichkeiten hinsichtlich der Hopfenisomerisierung. Dies bietet die Möglichkeit, die Rohstoffausbete im Brauprozess zu verbessern. Das System trennt die Feststoffe von der Flüssigkeit mittels vier rotierenden Modulen mit Scheibenfilterpaaren. Der Übergangsbereich zwischen den Modulen bietet die Möglichkeit, mit Wasser oder einem Würzestrom anzuschwänzen, um die Feststoffe weiter zu extrahieren. Aufgrund der Prozessanordnung von Modul 1 bis Modul 4 nimmt der Extrakt von beispielsweise 17,0 °P auf 2,0 °P ab, während der pH-Wert von beispielweise pH 5,6 auf pH 7,0 ansteigt. Darüber hinaus ermöglicht eine parallele Behandlung der gesammelten Würzeströme eine Zeitersparnis in der Brauerei und eine verlängerte Kochzeit, um Hopfen in einem separaten Behälter zu isomerisieren. Um herauszufinden, welchen Einfluss die extremen Parameter dieses Systems auf die Hopfenisomerisierungsrate haben, wurde ein Screening-Experiment im Labormaßstab durchgeführt. Daher wurde mit Design Expert eine Versuchsplanung mit 32 Einzelversuchen erstellt. Ziel war es, die Ergebnisse sowohl auf das neuartige Sudhaussystem als auch auf das konventionelle Sudhaus mit Maischefilter oder Läuterbottich als Separationseinheit anzuwenden.

### Rohstoffe

Pilsner Malz, bezogen von Weyermann Malzfabrik, Bamberg, Deutschland. Hallertauer Magnum T90 (2014) Hopfenpellets mit 13,7 % α-Säuren, bezogen von Hopsteiner, Mainburg, Deutschland.

### Reagenzien

Silikon-Antischaumemulsion, Natriumhydroxid 1M-Lösung und Magnesiumacetat-Tetrahydrat (≥ 98%) wurden von der Carl Roth GmbH + Co. KG, Karlsruhe, Deutschland, bezogen. Salzsäurelösung (0.5M) wurde von der Waldeck GmbH & Co. KG, Münster, Deutschland bezogen. Entionisiertes Wasser.

### Instrumente

Die Mühle war eine Bühler-Mühle DLFU-230/50 mit einer Verstellung von 1,9 mm. Zur Herstellung der Maische wurde ein Maischapparat LP Electronic von Lochner Labor Technik GmbH und ein Maischapparat von Bender & Hobein verwendet. Die Konstruktion zur Trennung der Würze war ein Eigenbau mit einem Ostendorf KG 2000, Filtern mit 25 µm und 50 µm und einem Spanngurt. Die Würze wurde in einem Schott 2 L-Rundkolben mit einem Rückflusskühler und LabHEAT KM-ME gekocht. Zur Trennung des Heißtrubs wurde Hahnemühle Filterpapier für Malz- und Bieranalyse DF 2555 320 mit einem Durchmesser von 320 mm verwendet.

### Versuchsplanung

Mit der Software Design Expert 10 (Version 10.0.3.1) wurde ein reduzierter zweistufiger Testplan erstellt. Im Basisplan wurden insgesamt 7 Anfangsfaktoren eingegeben, 5 numerische und 2 kategorische. Die kategorischen Faktoren werden in dieser Arbeit nicht weiter betrachtet, da sie zu keinen relevanten Ergebnissen geführt haben. In Tabelle 1 ist das faktorielle Design aufgeführt. Aufgrund des Screening-Experiments hatte jeder Faktor zwei Stufen.

### Probenvorbereitung

Die Würzeproben wurden nach folgendem Muster erstellt und gemäß des Versuchsplans von Design Expert eingestellt. Jeder Lauf wurde einmal repliziert, wobei die experimentelle Reihenfolge aller Läufe in einer Zufallsfolge festgelegt wurde.

Die Maische wurde im Verhältnis 1:3 (Schrot zu Wasser) hergestellt. Das Infusions-Brauverfahren war 40 Minuten bei 62 °C, 20 Minuten bei 72 °C, 2 Minuten bei 78 °C. Der Rührer arbeitete konstant mit 200 U/min. Anschließend wurde die Maische in den Filter überführt, gefolgt von einer Stunde Separationszeit. Um die Stammwürze und den pH-Wert einzustellen und um die Hopfenmenge zu berechnen, wurden die Dichte, die Masse, der pH-Wert und die Stammwürze der abgetrennten Würze gemessen. Nach erfolgreicher Einstellung der Parameter mit Natronlauge auf einen pH-Wert von 7,0 und Salzlösung auf einen pH-Wert von 5,6, wurde die Würze in den Rundkolben überführt. Entsprechend der Versuchsanordnung wurde den Proben Magnesium hinzugegeben, um den Einfluss von Magnesium zu untersuchen. Die Würze wurde dann unter atmosphärischen Bedingungen erhitzt. Zu Beginn der Kochung, mit dem ersten leichten Aufkochen der Würze, wurde Hopfen dosiert. Die Kochbedingungen wurden an ein konventionelles Sudhaus mit einer Kochzeit von 60 min angepasst, sowie an das neue Sudhaus, wo die Kochzeit aufgrund der parallelen Prozesse 120 min betragen kann. Nach der spezifischen Kochzeit wurde der Heißtrub von der Würze getrennt.

### Bittereinheiten

Die Bittereinheiten (BU) der Würzen wurden auf Basis von MEBAK 2.17.1 (9) ermittelt.

### Quantifizierung der iso-α-Säuren, α-Säuren und β-Säuren

Die iso-α-Säuren, α-Säuren und β-Säuren der Würzen wurden gemäß der spezifischen HPLC-Analyse des Forschungszentrum Weihenstephan für Brau- und Lebensmittelqualität in Freising bestimmt.

### Ergebnisse und Diskussion

### Auswirkungen auf α-Säuren

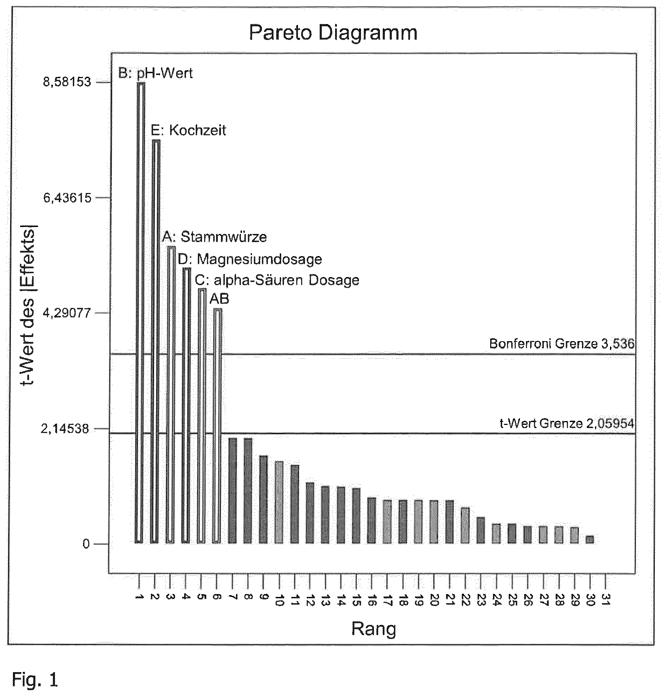

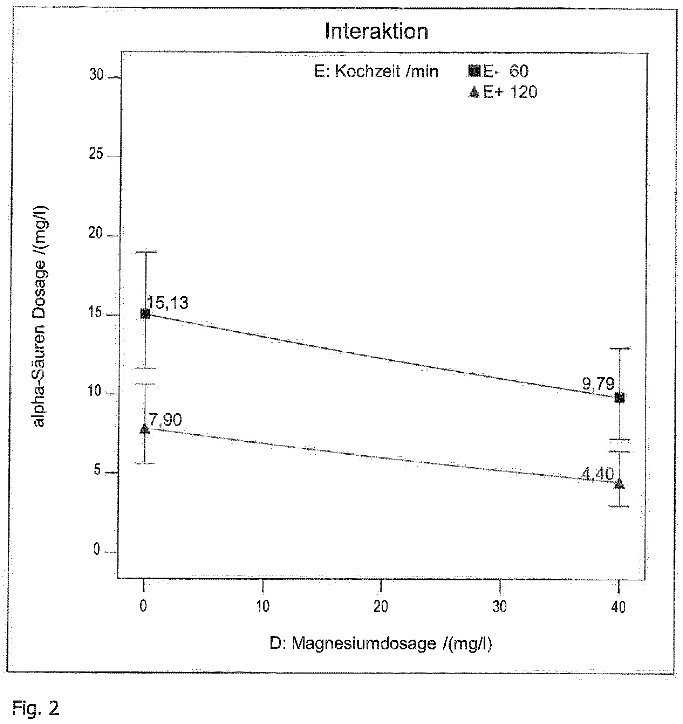

Die Auswertung der Einflussfaktoren auf die verbleibenden α-Säuren in gekochter Würze in Fig. 1 zeigt, dass der pH-Wert und die Kochzeit den größten Einfluss haben, gefolgt von der Stammwürze, der Magnesiumzugabe und der Dosierung der α-Säuren. Der pH-Wert ist aufgrund des Löslichkeitsverhaltens der α-Säuren wichtig. Im Unterschied zu den in der Kochwürze gemessenen iso-α-Säuren wirkt sich die Magnesiumgabe hier aus. Magnesiumionen sind ein Katalysator für die Isomerisierung von Humulon. Daher kann Magnesiumoxid als Katalysator für die Herstellung von isomerisierten Pellets verwendet werden. Die Bewertung des Einflusses von Magnesium auf die verbleibenden α-Säuren in Fig. 2 zeigt, dass eine Reduzierung zwischen 35 % bei einer Kochzeit von 60 min und 44 % bei einer Kochzeit von 120 min möglich ist. Magnesium als wesentlicher Einfluss-Parameter für den Gehalt an iso-α-Säuren in der Kochwürze kann jedoch später nicht mehr festgestellt werden. Mit Magnesium als Katalysator scheint eine Isomerisierungszeit von 10 min ausreichend zu sein. Dies führt zu der Annahme, dass entweder die Temperatur zu hoch oder die Kochzeit zu lang war, um einen Einfluss des Katalysators auf die Isomerisierung selbst festzustellen.

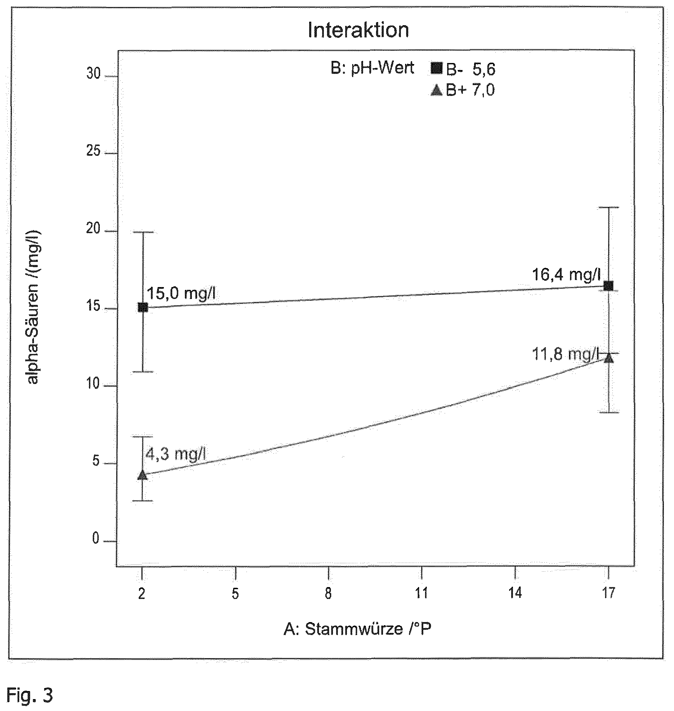

Die weitere Betrachtung der α-Säuren, die nach 60 min Kochzeit in der Würze verbleiben, und die Dosierung von 60 mg/L α-Säuren zu Beginn der Kochzeit in Fig. 3 zeigt verschiedene Ergebnisse in Abhängigkeit von der Stammwürze und des pH-Werts. Je niedriger die Stammwürze auf der x-Achse, desto stärker der Einfluss des pH-Werts. Dies ist dargestellt durch den größeren Abstand zwischen der schwarzen Linie (pH 5,6) und der roten Linie (pH 7,0). Durch die Reduzierung der Stammwürze von 17,0 °P auf 2,0 °P kann die Menge von α-Säuren um ca. 64 % bei einem pH-Wert von 7,0 gesenkt werden. Bei einem vorherrschenden pH-Wert von 5,6 beträgt die Reduzierung nur etwa 9 %. Es ist daher fraglich, ob es sinnvoll wäre, die Stammwürze in einem konventionellen Sudhaus zu reduzieren.

### Auswirkungen auf iso-α-Säuren

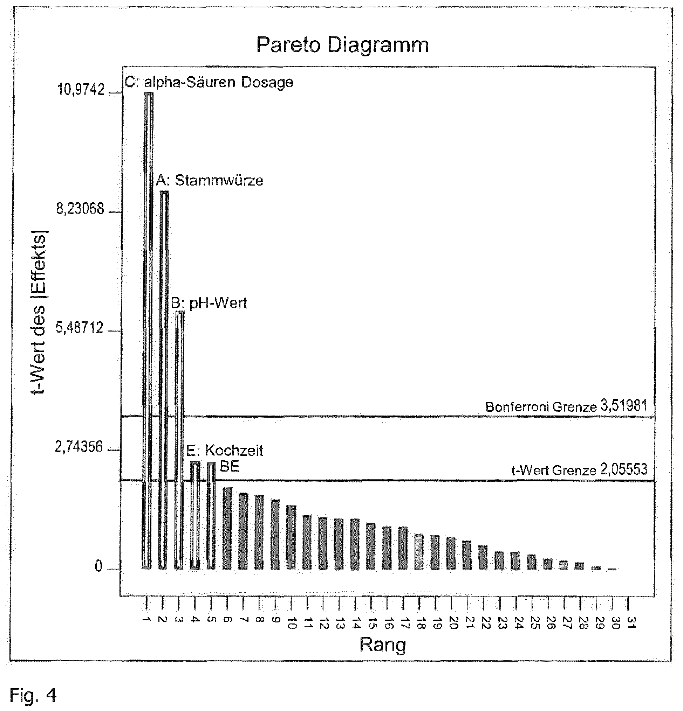

Parameter, die die Menge an iso-α-Säuren in der gekochten Würze maßgeblich beeinflussen sind wie folgt: Dosierung von α-Säuren, Stammwürze, pH-Wert und Kochzeit. Die Magnesium-Dosierung hat keinen Einfluss auf die Menge der produzierten iso-α-Säuren. Fig. 4 zeigt die einzelnen Parameter sowie die kombinatorisch wirkenden Faktoren, die zur Auswertung der Ergebnisse ausgewählt wurden.

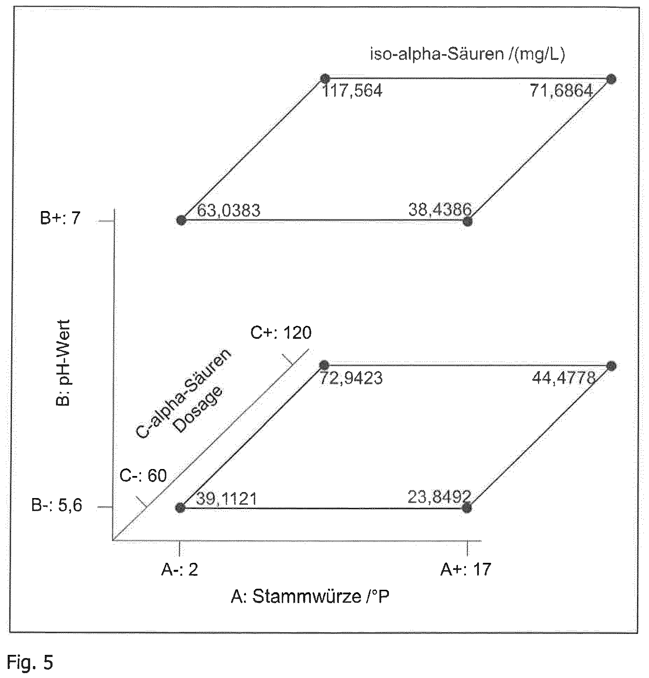

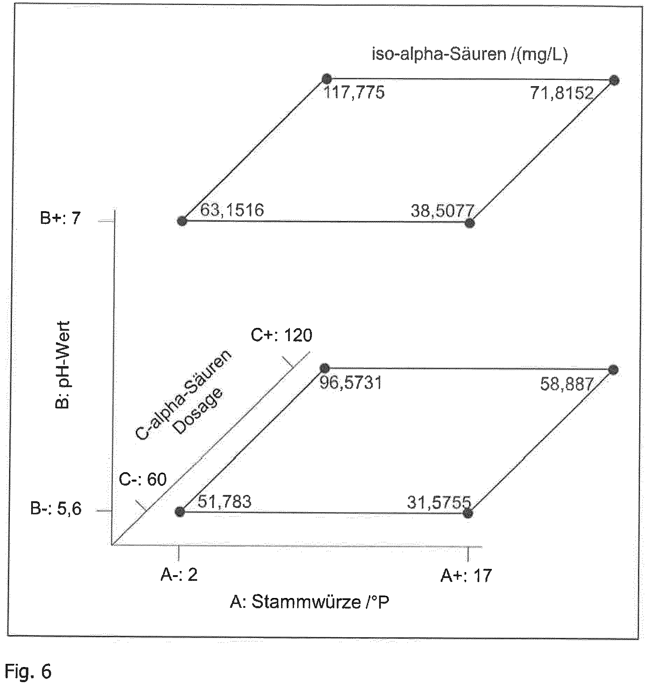

In Fig. 5 und 6 sind die Parameter Stammwürze auf der x-Achse, pH-Wert auf der y-Achse und die α-Säure-Dosierung auf der z-Achse bei einer Kochzeit von 60 und 120 min dargestellt. Die rot markierten Werte stellen die gemessenen iso-α-Säuren in der gekochten Würze bei verschiedenen Parametereinstellungen dar. Eine vollständige Isomerisierung wird bereits nach 60 min Kochzeit (Fig. 5) bei einem vorherrschenden pH-Wert von 7,0 und einer Stammwürze von 2,0 °P erreicht. Es gibt keinen wesentlichen Unterschied zwischen der Isomerisierungsrate bei einer niedrigen α-Säuren-Dosierung von 60 mg/L und einer hohen Dosierung von 120 mg/L. Bei einem vorherrschenden pH-Wert von 5,6 hat die Kochzeit daher einen größeren Einfluss auf die Isomerisierungsrate als bei einem pH-Wert von 7,0.

Der Vergleich der Fig. 5 und 6 zeigt, dass die Verlängerung der Kochzeit von 60 Minuten auf 120 Minuten nicht zu einer Erhöhung der Isomerisierungsrate bei einem vorherrschenden pH-Wert von 7,0 führte, auch nicht bei einer niedrigeren Stammwürze. Bei einem pH-Wert von 5,6 und einer doppelten Kochzeit steigt jedoch die Ausbeute um 32 %. Theoretisch wäre daher eine Verlängerung der Kochzeit in einem konventionellen Sudhaus, in dem ein ähnlicher pH-Wert in der Würze herrscht, für die Hopfenausbeute rentabel.

Nun stellt sich die Frage, warum es bei einem pH-Wert von 7,0 und einer Verdoppelung der Kochzeit zu keiner Erhöhung kommt. Insbesondere die schwerer löslichen α- und β-Säuren binden sich an Heißtrub, der neben festen Partikeln aus 250 bis 300 mg/L Proteintrub besteht. Hier scheint es einen Einfluss der Zucker Glukose und Maltose auf die Isomerisierungsrate zu geben, aber dies scheint nicht die Ursache der Bitterstoffverluste zu sein. Stattdessen können die α-Säuren an Gefäßwänden haften, wenn Probleme hinsichtlich der Löslichkeit auftreten. Dies ist bei einem pH-Wert von 7,0 nahezu unmöglich. Daher wird angenommen, dass die bessere Löslichkeit der α-Säuren bei einem pH-Wert von 7,0 nachteilig ist, wenn die Stammwürze höher ist und zwar aufgrund einer Dosierung von α-Säuren zu Beginn der Kochung, bei der nicht alle α-Säure-affinen Proteine ausgefällt sind. Dies führt zu α-Säuren-Verlusten, die mit Proteinen ausgefällt werden und so für die Isomerisierung nicht mehr zur Verfügung stehen.

### Auswirkungen auf β-Säuren

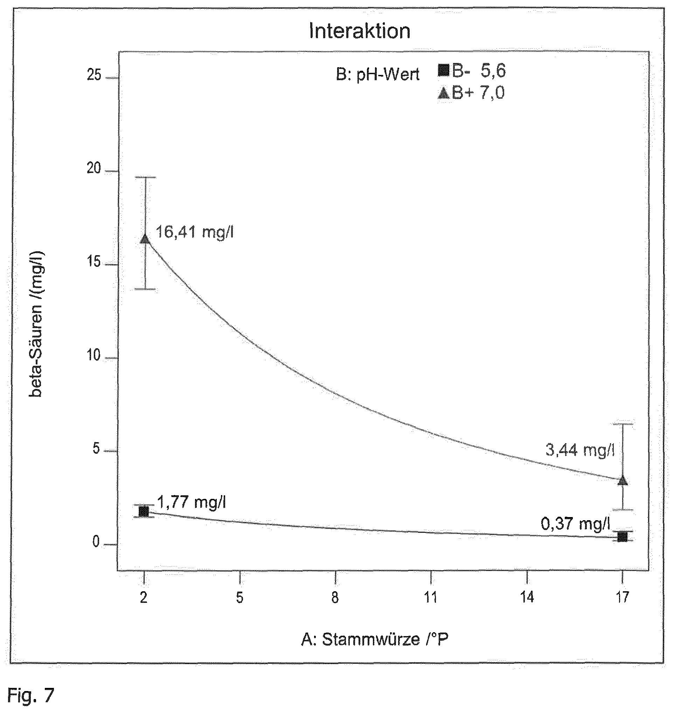

Die größten Faktoren, die die β-Säuren in der gekochten Würze beeinflussen, sind der pH-Wert und die Stammwürze mit einem Konfidenzintervall von 95 %. Diese beiden Faktoren wurden ausgewählt, um die Ergebnisse der β-Säuren mit Design Expert auszuwerten. Fig. 7 zeigt die Wechselwirkung zwischen den Faktoren und der Menge an β-Säuren. Wie bereits bei den α-Säuren beschrieben, ist der Einfluss des pH-Wertes umso größer, je geringer die Stammwürze. Diese Beobachtung beruht auf der verbesserten Löslichkeit von β-Säuren bei höheren pH-Werten. Ähnlich wie α-Säuren, fallen β-Säuren aufgrund ihrer unzureichenden Löslichkeit mit Proteinen bei einem niedrigen pH-Wert aus, was zu einem geringeren Gehalt an β-Säuren in Würzen mit höheren Stammwürzen führt. Während der Würzekochung wandeln sich die β-Säuren vorrangig in Hulupone um, die sich positiv auf den Geschmack auswirken und das Bier vollmundiger machen. 80 % der dosierten Menge an β-Säuren können im Trub nachgewiesen werden. Im vorliegenden Versuch wurde die Würze erst nach der Entfernung des Trubs untersucht, nicht jedoch der Trub selbst. Die Werte zeigen, dass durch eine Verringerung der Stammwürze, die zu einer Reduzierung der Trubmenge führt, mehr β-Säuren in der Würze verbleiben und im Bier einen verbesserten vollmundigen Geschmack erzeugen. Dementsprechend sollten die Biere, die mit dem neuartigen System hergestellt werden, aufgrund des erhöhten β-Säurewertes einen vollmundigeren Geschmack aufweisen. Nach Entfernung des Trubs enthält die Würze noch deutlich höhere Werte an β-Säuren.

### Auswirkungen auf Bittereinheiten

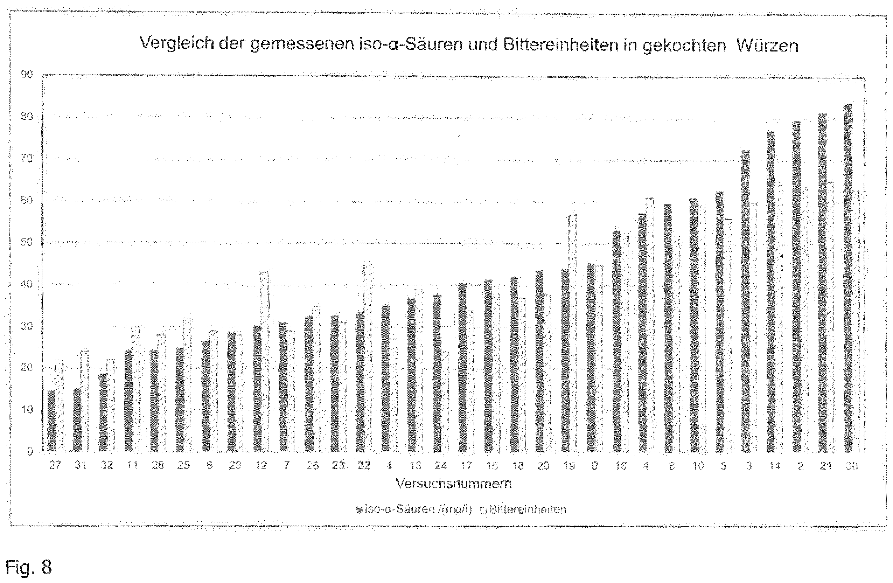

Ein Vergleich der Bittereinheiten in der gekochten Würze mit den gemessenen iso-α-Säuren in Fig. 8 zeigt, dass bei etwa 12 % der Versuche der Gehalt der Bittereinheiten ähnlich wie bei den iso-α-Säuren ist und bei 59 % der Versuche die Bittereinheiten niedriger sind als die iso-α-Säuren. Die Verwendung von Sorten mit hohem α-Gehalt bei der Bierherstellung führt zu geringeren Bitterstoffen in der Würze. Darüber hinaus beträgt das Verhältnis von Bittereinheiten zu iso-α-Säuren fast 1, wenn zu Beginn des Kochens Hopfen mit einem hohen α-Gehalt dosiert wird, wie es in diesem Screening-Experiment durchgeführt wurde. Biere, in denen tetrahydro-iso-α-Säuren vorhanden sind, weisen einen geringeren Wert an Bittereinheiten auf. Dies kann durch die Absorptionsmaxima der beiden Substanzen erklärt werden. Während tetrahydro-iso-α-Säuren ein Absorptionsmaximum bei 310 nm aufweisen, werden die Bittereinheiten bei einer Wellenlänge von 275 nm bestimmt. Reduzierte iso-α-Säuren können eingesetzt werden, um schaumstabile Biere zu erhalten. Die tetrahydro-iso-α-Säuren entstehen durch Hydrierung der Doppelbindungen in den Seitenketten der iso-α-Säuren. Es ist davon auszugehen, dass dieser Versuch auch eine Substanz produziert hat, die nicht in die Bestimmung der Bittereinheiten einbezogen wird.

### Schlussfolgerungen

Die Ergebnisse der iso-α-Säuren zeigen, dass eine Verlängerung der Kochzeit von 60 min auf 120 min unter bestimmten Bedingungen (pH-Wert 7,0) nicht effizient ist. Die Verdoppelung der Kochzeit bei einem pH-Wert von 5,6 führt zu einer Erhöhung der Isomerisierungsrate um 32 %. Wenn die Würze einen hohen pH-Wert von 7,0 und eine Stammwürze von 17,0 °P aufweist, kommt es zu keiner Erhöhung der Isomerisierungsrate, da die Trübungsbildung stärker ist und dementsprechend mehr Bitterstoffe verloren gehen.

Bei α-Säuren ist der Einfluss des pH-Wertes umso größer, je niedriger die Stammwürze ist. Wenn die Stammwürze bei einem pH-Wert von 17,0 °P auf 2,0 °P reduziert wird, können die α-Säuren um 64 % reduziert werden.

Neben der Erhöhung der Isomerisierungsrate bei einem pH-Wert von 7,0 und einer Stammwürze von 2,0 °P treten auch positive Effekte wie höhere Gehalte an β-Säuren auf. Dies führt theoretisch zu positiven Nebenwirkungen für das Bier, wie einer verbesserten Schaumstabilität und einer verbesserten mikrobiologischen Stabilität.

Infolge dieser Versuche ermöglicht die Kenntnis der Würzezusammensetzung eine optimale Einstellung der α-Säuredosierung und geringfügige Änderungen des Kochprozesses führen zu höheren Isomerisierungsraten. Dieses Wissen kann auch auf ein konventionelles Sudhaus übertragen werden, wodurch der Hopfen- und Energieverbrauch gesenkt werden kann.

**Tabelle 1: Faktorielles Versuchsdesign erstellt mit Design Expert**

| Run | Faktor 1 | Faktor 2 | Faktor 3 | Faktor 4 | Faktor 5 |
|---|---|---|---|---|---|
| | A: Stammwürze/°P | B: pH-Wert /- | C: α-Säuren Dosage /(mg/l) | D: Magnesium Dosage /(mg/l) | E: Kochzeit/min |
| 1 | 2,0 | 5,6 | 60 | 0 | 120 |
| 2 | 2,0 | 7,0 | 120 | 0 | 60 |
| 3 | 2,0 | 5,6 | 120 | 40 | 120 |
| 4 | 17,0 | 7,0 | 120 | 0 | 60 |
| 5 | 17,0 | 7,0 | 120 | 0 | 120 |
| 6 | 17,0 | 7,0 | 60 | 40 | 60 |
| 7 | 17,0 | 7,0 | 60 | 0 | 120 |
| 8 | 2,0 | 5,6 | 120 | 40 | 60 |
| 9 | 17,0 | 5,6 | 120 | 40 | 120 |
| 10 | 2,0 | 5,6 | 120 | 0 | 120 |
| 11 | 17,0 | 7,0 | 60 | 0 | 60 |
| 12 | 17,0 | 5,6 | 120 | 0 | 60 |
| 13 | 17,0 | 5,6 | 120 | 0 | 120 |
| 14 | 2,0 | 7,0 | 120 | 40 | 60 |
| 15 | 2,0 | 7,0 | 60 | 0 | 120 |
| 16 | 17,0 | 7,0 | 120 | 40 | 60 |
| 17 | 2,0 | 7,0 | 60 | 40 | 60 |
| 18 | 2,0 | 7,0 | 60 | 40 | 120 |
| 19 | 2,0 | 5,6 | 120 | 0 | 60 |
| 20 | 2,0 | 7,0 | 60 | 0 | 60 |
| 21 | 2,0 | 7,0 | 120 | 0 | 120 |
| 22 | 17,0 | 5,6 | 120 | 40 | 60 |
| 23 | 17,0 | 7,0 | 60 | 40 | 120 |
| 24 | 2,0 | 5,6 | 60 | 40 | 120 |
| 25 | 2,0 | 5,6 | 60 | 0 | 60 |
| 26 | 2,0 | 5,6 | 60 | 40 | 60 |
| 27 | 17,0 | 5,6 | 60 | 40 | 60 |
| 28 | 17,0 | 5,6 | 60 | 0 | 120 |
| 29 | 17,0 | 7,0 | 120 | 40 | 120 |
| 30 | 2,0 | 7,0 | 120 | 40 | 120 |
| 31 | 17,0 | 5,6 | 60 | 0 | 60 |
| 32 | 17,0 | 5,6 | 60 | 40 | 120 |

Die beigefügten Figuren zeigen folgendes:
Fig. 1 zeigt ein Pareto-Diagramm mit den Parametern, die einen wesentlichen Einfluss auf die verbleibenden gelösten α-Säuren in der gekochten Würze haben. Neben den einzelnen Parametern gibt es einen Kombinationseffekt des pH-Wertes und der Stammwürze.
Fig. 2 zeigt ein Diagramm, in dem der Einfluss der Magnesiumdosierung nach einer Kochzeit von 60 min (schwarze Linie) und 120 min (rote Linie) dargestellt ist. Die Magnesiumdosierung von 40 mg/L reduziert die α-Säuren um 35% bei einer Kochzeit von 60 min und um 44 % bei einer Kochzeit von 120 min.
Fig. 3 zeigt die Wechselwirkung der Parameter Stammwürze in °P und pH-Wert [-] auf die gelösten α-Säuren in mg/L nach einer Kochzeit von 60 min und einer α-Säuredosierung von 60 mg/L zu Beginn der Kochung. Der Einfluss des pH-Wertes ist umso größer, je geringer die Stammwürze ist.
Fig. 4 zeigt ein Pareto-Diagramm mit den Parametern, die einen wesentlichen Einfluss auf die Isomerisierungsrate haben. Neben den einzelnen Parametern gibt es die kombinatorische Wirkung des pH-Wertes und der Kochzeit. Die orangenfarbenen Balken stellen die positiven Einflüsse auf die iso-α-Säuren dar.
Fig. 5 zeigt eine Auswertung der iso-α-Säuremenge in mg/l nach einer Kochzeit von 60 min und folgenden eingestellten Parametern: Stammwürze 2,0 °P bzw. 17,0 °P, pH-Wert 5,6 bzw. 7,0 und α-Säuredosierung 60 mg/L bzw. 120 mg/L. Die Werte zeigen eine deutlich höhere Isomerisierungsrate bei einem vorherrschenden pH-Wert von 7,0. Dies ist auf die bessere Löslichkeit der α-Säuren und damit auf die stärkere Isomerisierung zurückzuführen.
Fig. 6 zeigt eine Auswertung der iso-α-Säuremenge in mg/L nach 120 min Kochzeit und folgenden eingestellten Parametern: Stammwürze 2,0 °P bzw. 17,0 °P, pH-Wert 5,6 bzw. 7,0 und α-Säuredosierung 60 mg/L bzw. 120 mg/L. Die Erhöhung des pH-Wertes von 5,6 auf 7,0 hat nur bei einer hohen α-Säuredosierung einen wesentlichen Effekt.
Fig. 7 zeigt die Wechselwirkung der Parameter Stammwürze in °P und pH-Wert [-] auf die gelösten β-Säuren in mg/L nach einer Kochzeit von 60 min und einer α-Säuredosierung von 60 mg/L zu Beginn der Kochung. Der Einfluss des pH-Wertes ist umso größer, je geringer die Stammwürze ist.

Fig. 8 zeigt einen Vergleich der gemessenen Bitterstoffe durch spektometrisch gemessene Bittereinheiten und iso-α-Säuren (HPLC). Die Daten sind nach aufsteigenden iso-α-Säure-Werten sortiert. Bei 59 % der Proben liegen die Bittereinheiten unter den iso-α-Säure-Werten.

### Experimenteller Teil 2

Im Nachfolgenden wird der Einfluss des Läutersystems mit entsprechender Würzequalität in Abhängigkeit der Vorkochzeit/Kochzeit und alpha-Säuren-Dosagen auf die Menge der verbleibenden iso-alpha-Säuren in der gekochten Würze untersucht.

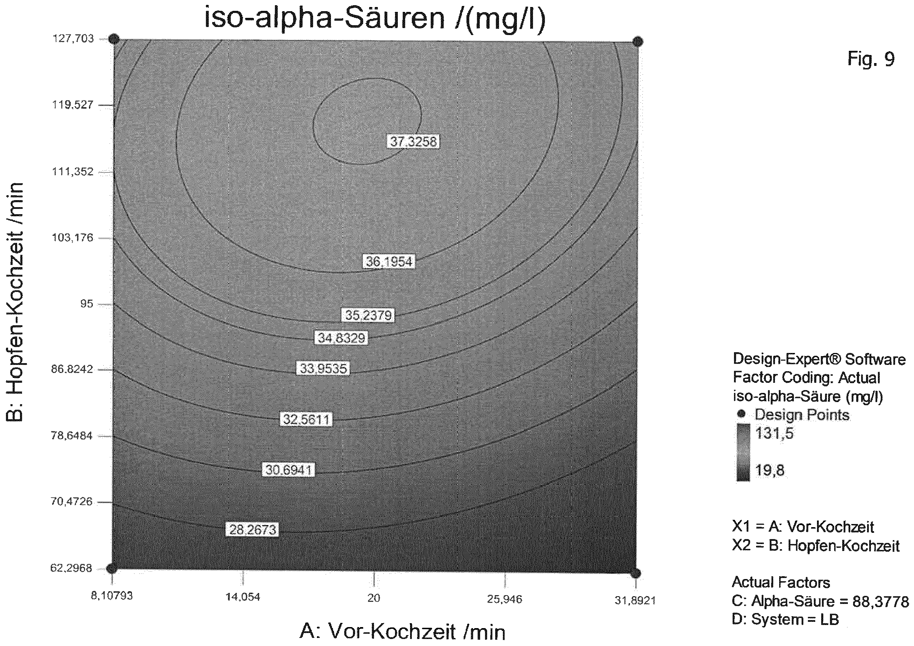

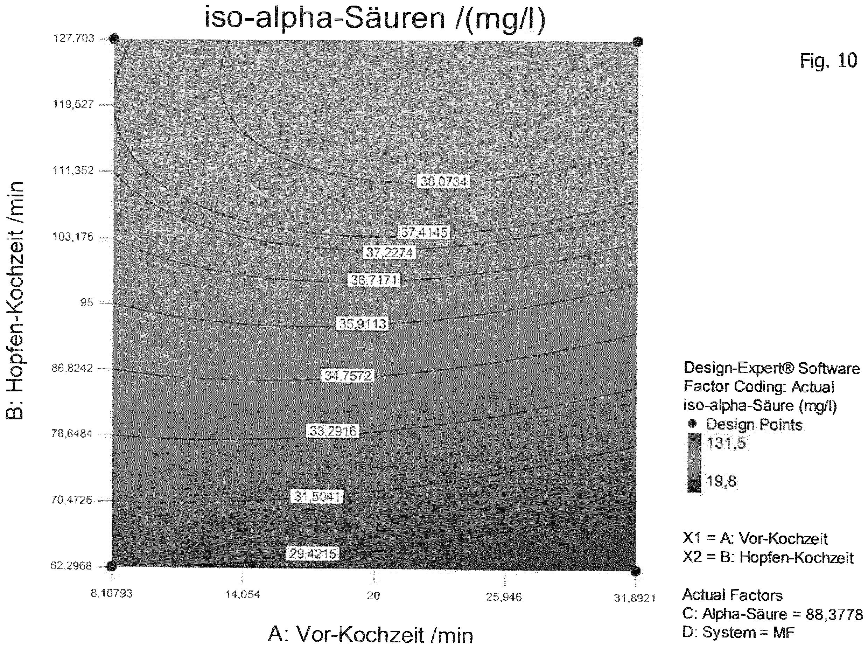

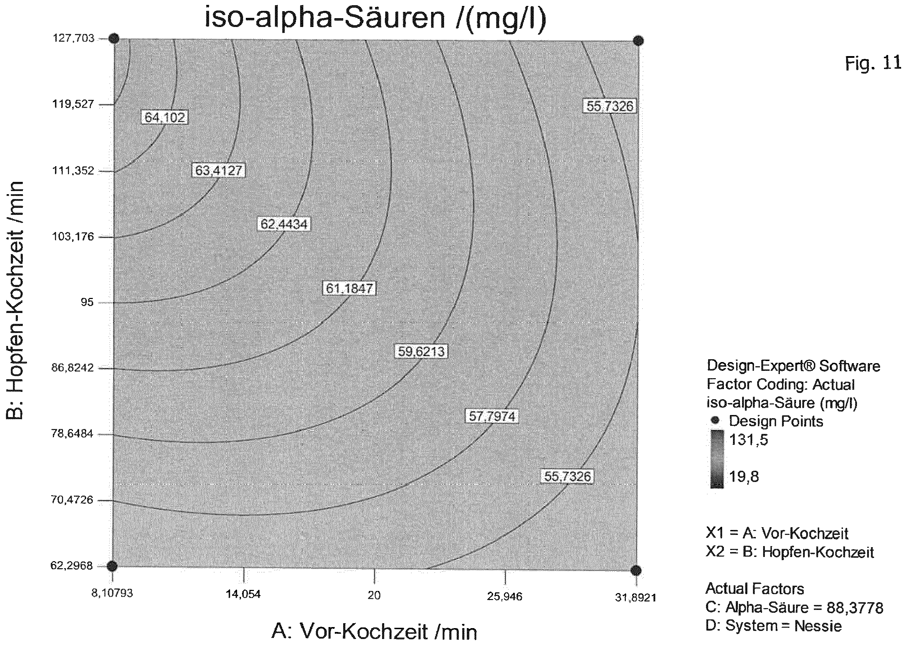

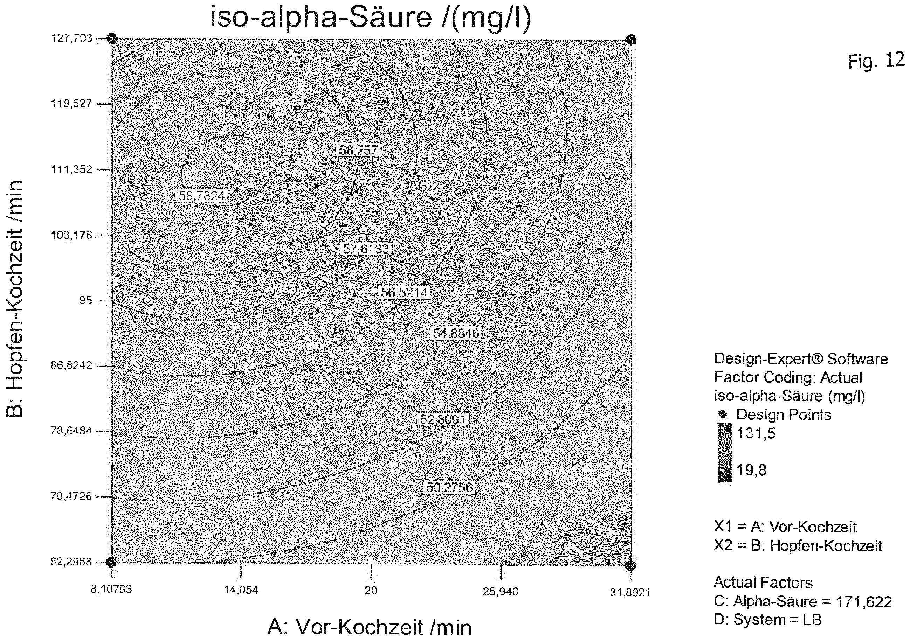

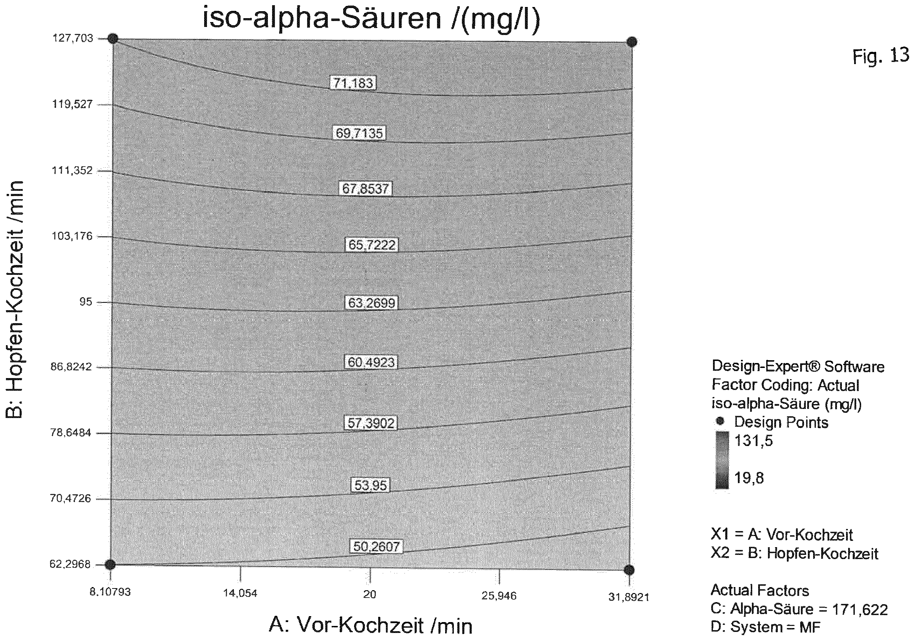

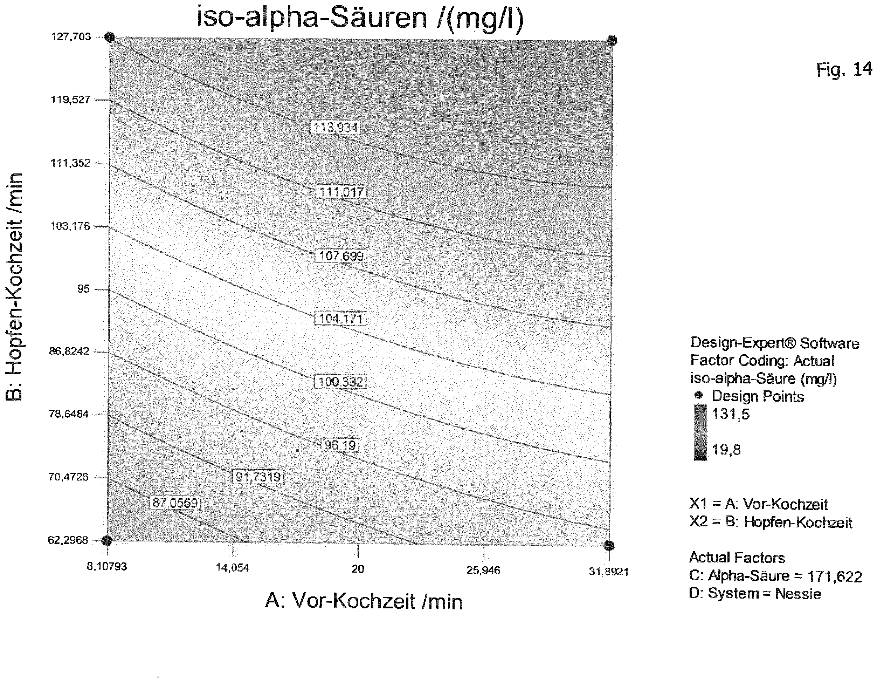

Die Ergebnisse sind in Gestalt der Figuren 9 bis 14 dargestellt. Zu den einzelnen Figuren werden die nachfolgenden Erläuterungen gegeben:
Fig. 9:
   Um bei einem Läuterbottichsud bei einer α-Säure-Dosage von ca. 88,4 mg/l eine hohe Ausbeute an iso-alpha-Säuren (hier ca. 37 mg/l) in der Würze zu erhalten, sollte im optimalen Fall die Vorkochzeit zwischen 15 und 25 min, vorzugsweise 19 min, und die Kochzeit (Kochzeit ab der Hopfenzugabe bis zum Ausschlagen) 105 bis 125 min, vorzugsweise 112 min, betragen.
   Hieraus ergibt sich, dass bei der Würzegewinnung mittels eines Läuterbottichs und moderater α-Säure-Dosage eher längere Vorkochzeiten (15 bis 25 min) und vorzugsweise Kochzeiten von 100 bis 130 min gewählt werden sollten, um hohe Iso-α-Säuren-Ausbeuten zu erzielen.
Fig. 10:
   Um bei einem Maischefiltersud bei einer α-Säure-Dosage von ca. 88,4 mg/l eine hohe Ausbeute an iso-alpha-Säuren (hier ca. 38 mg/l) in der Würze zu erhalten, sollte im optimalen Fall die Vorkochzeit zwischen 8 und 20 min, vorzugsweise 11 min, und die Kochzeit (Kochzeit ab der Hopfenzugabe bis zum Ausschlagen) 100 bis 125 min, vorzugsweise 105 min, betragen.
   Hieraus ergibt sich, dass bei der Würzegewinnung mittels eines Maischefilters und moderater α-Säure-Dosage eher mittlere Vorkochzeiten (8 bis 20 min) und vorzugsweise Kochzeiten von 100 bis 125 min gewählt werden sollten, um hohe Iso-α-Säuren-Ausbeuten zu erzielen.
Fig. 11:
   Um bei einem Sud, hergestellt mittels eines Drehscheibenfilters (Nessie), bei einer α-Säure-Dosage von ca. 88,4 mg/l eine hohe Ausbeute an Iso-α-Säuren (hier ca. 64 mg/l) in der Würze zu erhalten, sollte im optimalen Fall die Vorkochzeit zwischen 0 und 10 min, vorzugsweise 0 min, und die Kochzeit (Kochzeit ab der Hopfenzugabe bis zum Ausschlagen) 110 bis 130 min, vorzugsweise 120 min, betragen.
   Hieraus ergibt sich, dass bei der Würzegewinnung mittels eines Drehscheibenfilters (Nessie) und moderater α-Säure-Dosage kurze Vorkochzeiten (0 bis 10 min) und vorzugsweise Kochzeiten von 110 bis 130 min gewählt werden sollten, um hohe Iso-α-Säuren-Ausbeuten zu erzielen.
Fig. 12:
   Um bei einem Läuterbottichsud bei einer α-Säure-Dosage von ca. 172 mg/l eine hohe Ausbeute an iso-alpha-Säuren (hier ca. 59 mg/l) in der Würze zu erhalten, sollte im optimalen Fall die Vorkochzeit zwischen 8 und 20 min, vorzugsweise 13 min, und die Kochzeit (Kochzeit ab der Hopfenzugabe bis zum Ausschlagen) 100 bis 125 min, vorzugsweise 111 min, betragen.
   Hieraus ergibt sich, dass bei der Würzegewinnung mittels eines Läuterbottichs und hoher α-Säure-Dosage eher längere Vorkochzeiten (8 bis 20 min) und vorzugsweise Kochzeiten von 100 bis 130 min gewählt werden sollten, um hohe Iso-α-Säuren-Ausbeuten zu erzielen.
Fig. 13:
   Um bei einem Maischefiltersud bei einer α-Säure-Dosage von ca. 172 mg/l eine hohe Ausbeute an iso-alpha-Säuren (hier ca. 72 mg/l) in der Würze zu erhalten, sollte im optimalen Fall die Vorkochzeit zwischen 8 und 20 min, vorzugsweise 11 min, und die Kochzeit (Kochzeit ab der Hopfenzugabe bis zum Ausschlagen) 115 bis 135 min, vorzugsweise 125 min, betragen.
   Hieraus ergibt sich, dass bei der Würzegewinnung mittels eines Maischefilters und hoher α-Säure-Dosage eher mittlere Vorkochzeiten (8 bis 20 min) und vorzugsweise Kochzeiten von 115 bis 135 min gewählt werden sollten, um hohe Iso-α-Säuren-Ausbeuten zu erzielen.
Fig. 14:
   Um bei einem Sud, hergestellt mittels eines Drehscheibenfilters (Nessie), bei einer α-Säure-Dosage von ca. 172 mg/l eine hohe Ausbeute an iso-alpha-Säuren (hier ca. 115 mg/l) in der Würze zu erhalten, sollte im optimalen Fall die Vorkochzeit zwischen 0 und 20 min, vorzugsweise 10 bis 15 min, und die Kochzeit (Kochzeit ab der Hopfenzugabe bis zum Ausschlagen) 115 bis 130 min, vorzugsweise 125 min, betragen.
   Hieraus ergibt sich, dass bei der Würzegewinnung mittels eines Drehscheibenfilters (Nessie) und hoher α-Säure-Dosage kurze Vorkochzeiten (0 bis 20 min) und vorzugsweise Kochzeiten von 110 bis 130 min gewählt werden sollten, um hohe Iso-α-Säuren-Ausbeuten zu erzielen.

Weitere Kombinationsmöglichkeiten, die Einfluss auf die Hopfenisomerisierungsrate haben:
- allgemein:
   Einfluss des Läutersystems mit entsprechender Würzequalität auf die auszuwählende Vorkoch-/Vorheißhaltezeit (dies entspricht der Kochzeit/Heißhaltezeit ohne Hopfen) und die Kochzeit/Heißhaltezeit der Würze mit Hopfen (vorstehende Tabelle 1)
- in der Würze verbleibende α-Säuren:
   Einfluss des Läutersystems mit entsprechender Würzequalität in Abhängigkeit der Vorkochzeit/Kochzeit auf die Menge der verbleibenden α-Säuren in der gekochten Würze
- β-Säuren:
   Einfluss des Läutersystems mit entsprechender Würzequalität in Abhängigkeit der Vorkochzeit/Kochzeit auf die β-Säuren-Konzentration in der gekochten Würze
- Bitterbegleitstoffe:
   Das Läutersystem mit der entsprechenden Würzequalität und pH-Wert hat Einfluss auf die Menge an Bitterbegleitstoffe in der gekochten Würze

Beobachtung: Bei Drehscheibenfilter- und Maischefilterwürzen tritt das Phänomen auf, dass die Bittereinheiten niedriger sind als die Iso-α-Säuren-Menge.

Dagegen sind bei Läuterbottichwürzen die Bittereinheiten bislang immer größer der Iso-α-Säuren-Menge.
- weitere Zusammenhänge:
   ∘ Einfluss eines rohstoffeigenen Additives auf die Menge an Iso-α-Säuren;
   ∘ Einfluss des Läutersystems mit entsprechender Würzequalität auf die Art der sich lösenden Bitterbegleitstoffe

## Patentansprüche

1. Verfahren zum Hopfen einer Würze oder eines Bieres, wenigstens mit den Schritten:
(a) Bestimmen einer Hopfengabe,
wobei die Hopfengabe wenigstens einen, vorzugsweise alle, der nachfolgend aufgeführten Kriterien oder Merkmale umfasst: Menge, Art und Zeitpunkt der Hopfengabe;
wobei die Menge vorzugsweise in Masse der Hopfengabe pro Volumen der zu hopfenden Würze oder des zu hopfenden Bieres oder in Masse der in der Hopfengabe enthaltenen α-Säuren pro Volumen der zu hopfenden Würze oder des zu hopfenden Bieres ausgedrückt wird;
wobei die Art der Hopfengabe wenigstens einen der folgenden einschließt: Naturhopfen, Doldenhopfen, Hopfenpellets, vorzugsweise Hopfenpellets T45, oder Hopfenpellets T90, Hopfenextrakt, vorzugsweise CO₂-Extrakt oder Ethanolextrakt, Hopfenprodukte, vorzugsweise reduzierte oder vorisomerisierte Hopfenprodukte;
wobei sich der Zeitpunkt der Hopfengabe auf den Verlauf des Würze- oder Bierbereitungsprozesses bezieht;
wobei vorzugsweise die Hopfengabe an einem einzigen Zugabepunkt oder an einer einzigen Stelle des Würze- oder Bierbereitungsprozesses erfolgen kann, wenn die Hopfengabe in einer einzigen Gabe erfolgt; oder
wobei vorzugsweise die Hopfengabe an mehreren Zugabepunkten oder an mehreren Stellen des Würze- oder Bierbereitungsprozesses oder an einem Zugabepunkt oder einer Stelle des Würze- oder Bierbereitungsprozesses zeitlich beabstandet voneinander erfolgen kann, wenn die Hopfengabe in Teilgaben erfolgt;
wobei bei der Bestimmung der Hopfengabe wenigstens einer der nachfolgend aufgeführten Parameter oder einer Kombinationen der nachfolgend aufgeführten Parameter berücksichtigt wird:
• Parameter betreffend das zur Herstellung der Würze oder des Bieres verwendete Brauwasser: pH-Wert, Leitfähigkeit, Calcium, Calciumhärte, Magnesium, Magnesiumhärte, Carbonathärte, Nichtcarbonathärte, Gesamthärte, Restalkalität;
• Parameter betreffend das zur Herstellung der Würze oder des Bieres verwendete Malz: Viskosität, Wassergehalt, Extrakt Feinschrot lufttrocken, Extrakt Feinschrot Trockensubstanz, Friabilimeter mehlig, Friabilimeter ganzglasig, Würze pH, Verzuckerung, Hartong VZ T45°C, Eiweißgehalt;
• Parameter betreffend die zur Isomerisierung oder zur Hopfung vorgesehene Würze: pH-Wert, Stammwürzegehalt, Volumen der Würze, Masse des Hopfenproduktes, freier Amino-N, gesamtlöslicher N, koagulierbarer N, Magnesium, Calcium, Polyphenole, Verdampfungsziffer, Partikelgrößenverteilung (Medianwert), Feststoffgehalt, Partikelfracht, Trübung, Gesamtpolyphenole, magnesiumsulfatfällbarer Stickstoff; löslicher Stickstoff, Proteingehalt, , Kolbachzahl, Schrotsortierung, Thiobarbitursäurezahl, Dimethylsulfid, Dimethylsulfid-Vorläufer, β-Glucan, Anthocyanogene, Zink, Oxalat, Mangan, Vorkoch-/Vorheißhaltezeit, Kochzeit, Heißhaltezeit;
• Parameter betreffend das Läutersystem: Maischefilter oder Läuterbottich oder Drehscheibenfiltration; ein Läutersystem in Kombination mit dem Mühlensystem;
• Parameter betreffend das Würzeaufheizsystem: Innenkocher, Außenkocher, Heißhaltevorrichtung; Umpumpen beim Aufheizen auf dem Weg ins Kochgefäß, Zeit, Temperatur, Würzeparameter dabei: pH-Wert, Stammwürzgehalt, pH-Wert, Magnesium-Gehalt, Eiweißgehalt;
• Parameter betreffend den zum Hopfen vorgesehenen Hopfen: Art des Hopfens, vorzugsweise Naturhopfen, Doldenhopfen, Hopfenpellets, vorzugsweise Hopfenpellets T45 oder Hopfenpellets T90, Hopfenextrakt, vorzugsweise CO₂-Extrakt oder Ethanolextrakt, Hopfenprodukte, vorzugsweise reduzierte oder vorisomerisierte Hopfenprodukte, α-Säure-Gehalt, Gehalt an Aromakomponenten, Ergebnisse von vorangegangenen Einzelanalysen, Lagerbedingungen;
• Parameter betreffend die Additive, vorzugsweise Zugabemenge, Konzentration in der Würze oder im Bier und/oder Art: Entschäumer, Mineralsäure, Mineralsalze, Carbonsäuren, rohstoffeigene Additive, Zucker, Farbebier, Hopfenharze;
• Parameter betreffend die Abtrennvorrichtung: Temperatur der Würze während der Klärung, Rastdauer, Klärungseffizienz oder Feststoffgehalt der Würze nach der Klärung, Änderung der Partikelfracht oder -messung, Hopfenzugabe während der Klärung;
(b) Mischen der in Schritt (a) ermittelten Hopfengabe mit der zu hopfenden Würze oder dem zu hopfenden Bier, vorzugsweise Zugeben der in Schritt (a) ermittelten Hopfengabe zu der zu hopfenden Würze oder zu dem zu hopfenden Bier; und
wobei die Hopfengabe in einer einzigen Gabe oder in einer Mehrzahl von Teilgaben, vorzugsweise zwei, drei oder vier Teilgaben, erfolgen kann; und
wobei die Hopfengabe an einem einzigen Zugabepunkt oder an einer einzigen Stelle des Würze- oder Bierbereitungsprozesses erfolgen kann, wenn die Hopfengabe in einer einzigen Gabe erfolgt; oder
wobei die Hopfengabe an mehreren Zugabepunkten oder an mehreren Stellen des Würze- oder Bierbereitungsprozesses oder an einem Zugabepunkt oder einer Stelle des Würze- oder Bierbereitungsprozesses zeitlich beabstandet voneinander erfolgen kann, wenn die Hopfengabe in Teilgaben erfolgt; und
(c) vorzugsweise Homogenisieren der in Schritt (b) erhaltenen Mischung.

2. Verfahren zum Bestimmen einer Hopfengabe zum Hopfen einer Würze oder eines Bieres,
wobei die Hopfengabe wenigstens einen, vorzugsweise alle, der nachfolgend aufgeführten Kriterien oder Merkmale umfasst: Menge, Art und Zeitpunkt der Hopfengabe;
wobei die Menge vorzugsweise in Masse der Hopfengabe pro Volumen der zu hopfenden Würze oder des zu hopfenden Bieres oder in Masse der in der Hopfengabe enthaltenen α-Säuren pro Volumen der zu hopfenden Würze oder des zu hopfenden Bieres ausgedrückt wird;
wobei die Art der Hopfengabe wenigstens einen der folgenden einschließt: Naturhopfen, Doldenhopfen, Hopfenpellets, vorzugsweise Hopfenpellets T45, oder Hopfenpellets T90, Hopfenextrakt, vorzugsweise CO₂-Extrakt oder Ethanolextrakt, Hopfenprodukte, vorzugsweise reduzierte oder vorisomerisierte Hopfenprodukte;
wobei sich der Zeitpunkt der Hopfengabe auf den Verlauf des Würze- oder Bierbereitungsprozesses bezieht;
wobei vorzugsweise die Hopfengabe in einer einzigen Gabe oder in einer Mehrzahl von Teilgaben (vorzugsweise zwei, drei oder vier Teilgaben) erfolgen kann;
wobei vorzugsweise die Hopfengabe an einem einzigen Zugabepunkt oder an einer einzigen Stelle des Würze- oder Bierbereitungsprozesses erfolgen kann, wenn die Hopfengabe in einer einzigen Gabe erfolgt; oder
wobei vorzugsweise die Hopfengabe an mehreren Zugabepunkten oder an mehreren Stellen des Würze- oder Bierbereitungsprozesses oder an einem Zugabepunkt oder einer Stelle des Würze- oder Bierbereitungsprozesses zeitlich beabstandet voneinander erfolgen kann, wenn die Hopfengabe in Teilgaben erfolgt;
wobei bei der Bestimmung der Hopfengabe wenigstens einer der nachfolgend aufgeführten Parameter oder eine Kombinationen der nachfolgend aufgeführten Parameter berücksichtigt wird:
• Parameter betreffend das zur Herstellung der Würze oder des Bieres verwendete Brauwasser: pH-Wert, Leitfähigkeit, Calcium, Calciumhärte, Magnesium, Magnesiumhärte, Carbonathärte, Nichtcarbonathärte, Gesamthärte, Restalkalität;
• Parameter betreffend das zur Herstellung der Würze oder des Bieres verwendete Malz: Viskosität, Wassergehalt, Extrakt Feinschrot lufttrocken, Extrakt Feinschrot Trockensubstanz, Friabilimeter mehlig, Friabilimeter ganzglasig, Würze pH, Verzuckerung, Hartong VZ T45°C, Eiweißgehalt;
• Parameter betreffend die zur Isomerisierung oder zur Hopfung vorgesehene Würze: pH-Wert, Stammwürzegehalt, Volumen der Würze, Masse des Hopfenproduktes, freier Amino-N, gesamtlöslicher N, koagulierbarer N, Magnesium, Calcium, Polyphenole, Verdampfungsziffer, Partikelgrößenverteilung (Medianwert), Feststoffgehalt, Partikelfracht, Trübung, Gesamtpolyphenole, magnesiumsulfatfällbarer Stickstoff; löslicher Stickstoff, Proteingehalt, Kolbachzahl, Schrotsortierung, Thiobarbitursäurezahl, Dimethylsulfid, Dimethylsulfid-Vorläufer, β-Glucan, Anthocyanogene, Zink, Oxalat, Mangan, Vorkoch-/Vorheißhaltezeit, Kochzeit, Heißhaltezeit;
• Parameter betreffend das Läutersystem: Maischefilter oder Läuterbottich oder Drehscheibenfiltration; ein Läutersystem in Kombination mit dem Mühlensystem;
• Parameter betreffend das Würzeaufheizsystem: Innenkocher, Außenkocher, Heißhaltevorrichtung; Umpumpen beim Aufheizen auf dem Weg ins Kochgefäß, Zeit, Temperatur, Würzeparameter dabei: pH-Wert, Stammwürzgehalt, pH-Wert, Magnesium-Gehalt, Eiweißgehalt;
• Parameter betreffend den zum Hopfen vorgesehenen Hopfen: Art des Hopfens, vorzugsweise Naturhopfen, Doldenhopfen, Hopfenpellets, vorzugsweise Hopfenpellets T45 oder Hopfenpellets T90, Hopfenextrakt, vorzugsweise CO2-Extrakt oder Ethanolextrakt, Hopfenprodukte, vorzugsweise reduzierte oder vorisomerisierte Hopfenprodukte, α-Säure-Gehalt, Gehalt an Aromakomponenten, Ergebnisse von vorangegangenen Einzelanalysen, Lagerbedingungen;
• Parameter betreffend die Additive, vorzugsweise Zugabemenge, Konzentration in der Würze oder im Bier und/oder Art: Entschäumer, Mineralsäure, Mineralsalze, Carbonsäuren, rohstoffeigene Additive, Zucker, Farbebier, Hopfenharze;
• Parameter betreffend die Abtrennvorrichtung: Temperatur der Würze während der Klärung, Rastdauer, Klärungseffizienz oder Feststoffgehalt der Würze nach der Klärung, Änderung der Partikelfracht oder -messung, Hopfenzugabe während der Klärung.

3. Verfahren nach Anspruch 1 oder 2, **dadurch gekennzeichnet, dass** bei der Bestimmung der Hopfengabe der nachfolgend aufgeführte Parameter oder eine der nachfolgend aufgeführten Kombinationen von Parametern berücksichtigt wird:
• der pH-Wert der Würze und/oder des Bieres;
oder
• der pH-Wert der Würze und/oder des Bieres, und die Vorkochzeit/Vorheißhaltezeit/Kochzeit/Heißhaltezeit der Würze;
oder
• der pH-Wert der Würze und/oder des Bieres, und der Stammwürzegehalt der Würze;
oder
• der pH-Wert der Würze und/oder des Bieres, und die Vorkochzeit/Vorheißhaltezeit/Kochzeit/Heißhaltezeit der Würze; und der Stammwürzegehalt der Würze;
oder
• der pH-Wert der Würze und/oder des Bieres, und die Vorkochzeit/Vorheißhaltezeit/Kochzeit/Heißhaltezeit der Würze, und der Stammwürzegehalt der Würze; und die Magnesiumkonzentration der Würze.

4. Verfahren nach wenigstens einem der Ansprüche 1 bis 3, **dadurch gekennzeichnet, dass** bei der Bestimmung der Hopfengabe der nachfolgend aufgeführte Parameter oder eine der nachfolgend aufgeführten Kombinationen von Parametern berücksichtigt wird:
• die α-Säure-Dosage zur Würze und/oder zum Bier;
oder
• die α-Säure-Dosage zur Würze und/oder zum Bier, und der Stammwürzegehalt der Würze;
oder
• die α-Säure-Dosage zur Würze und/oder zum Bier, und der Stammwürzegehalt der Würze; und der pH-Wert der Würze und/oder des Bieres;
oder
• die α-Säure-Dosage zur Würze und/oder zum Bier, und der Stammwürzegehalt der Würze; und der pH-Wert der Würze und/oder des Bieres, und die Vorkochzeit/Vorheißhaltezeit/Kochzeit/Heißhaltezeit der Würze.

5. Verfahren nach wenigstens einem der Ansprüche 1 bis 4, **dadurch gekennzeichnet, dass** bei der Bestimmung der Hopfengabe der nachfolgend aufgeführte Parameter oder eine der nachfolgend aufgeführten Kombinationen von Parametern berücksichtigt wird:
• der pH-Wert der Würze und/oder des Bieres;
oder
• der pH-Wert der Würze und/oder des Bieres, und der Stammwürzegehalt der Würze.

6. Verfahren nach wenigstens einem der Ansprüche 1 bis 5, **dadurch gekennzeichnet, dass** bei der Bestimmung der Hopfengabe der nachfolgend aufgeführte Parameter oder eine der nachfolgend aufgeführten Kombinationen von Parametern berücksichtigt wird:
• die α-Säure-Dosage zur Würze und/oder zum Bier;
oder
• die α-Säure-Dosage zur Würze und/oder zum Bier, und der Stammwürzegehalt der Würze;
oder
• die α-Säure-Dosage zur Würze und/oder zum Bier, und der Stammwürzegehalt der Würze; und der pH-Wert der Würze und/oder des Bieres;
oder
• die α-Säure-Dosage zur Würze und/oder zum Bier, und der Stammwürzegehalt der Würze; und der pH-Wert der Würze und/oder des Bieres, und die Vorkochzeit/Vorheißhaltezeit/Kochzeit/Heißhaltezeit der Würze.

7. Verfahren nach wenigstens einem der Ansprüche 1 bis 6, **dadurch gekennzeichnet, dass** die Bestimmung der Hopfengabe gemäß Schritt (a) unter Einsatz von Algorithmen auf Basis von maschinellem Lernen, automatisiertem maschinellen Lernen, neuronalen Netzen, künstlicher Intelligenz, deep learning, Fuzzy Logic, Case-based Reasoning (Fall-basiertes Schließen), Maximum-Likelihood-Methode, DDPG (deterministic policy gradient), A3C-LSTM (long-short term memory) oder dergleichen geschieht.

8. Würze oder Bier, hergestellt nach dem Verfahren nach wenigstens einem der Ansprüche 1 bis 7.

9. Verwendung wenigstens einer der nachfolgend aufgeführten Parameter oder einer Kombinationen der nachfolgend aufgeführten Parameter zur Bestimmung einer Hopfengabe, vorzugsweise zum Hopfen einer Würze oder eines Bieres, insbesondere in einem Verfahren zum Hopfen einer Würze oder eines Bieres:
• Parameter betreffend das zur Herstellung der Würze oder des Bieres verwendete Brauwasser: pH-Wert, Leitfähigkeit, Calcium, Calciumhärte, Magnesium, Magnesiumhärte, Carbonathärte, Nichtcarbonathärte, Gesamthärte, Restalkalität;
• Parameter betreffend das zur Herstellung der Würze oder des Bieres verwendete Malz: Viskosität, Wassergehalt, Extrakt Feinschrot lufttrocken, Extrakt Feinschrot Trockensubstanz, Friabilimeter mehlig, Friabilimeter ganzglasig, Würze pH, Verzuckerung, Hartong VZ T45°C, Eiweißgehalt;
• Parameter betreffend die zur Isomerisierung oder zur Hopfung vorgesehene Würze: pH-Wert, Stammwürzegehalt, Volumen der Würze, Masse des Hopfenproduktes, freier Amino-N, gesamtlöslicher N, koagulierbarer N, Magnesium, Calcium, Polyphenole, Verdampfungsziffer, Partikelgrößenverteilung (Medianwert), Feststoffgehalt, Partikelfracht, Trübung, Gesamtpolyphenole, magnesiumsulfatfällbarer Stickstoff; löslicher Stickstoff, Proteingehalt, , Kolbachzahl, Schrotsortierung, Thiobarbitursäurezahl, Dimethylsulfid, Dimethylsulfid-Vorläufer, β-Glucan, Anthocyanogene, Zink, Oxalat, Mangan, Vorkoch-/Vorheißhaltezeit, Kochzeit, Heißhaltezeit;
• Parameter betreffend das Läutersystem: Maischefilter oder Läuterbottich oder Drehscheibenfiltration; ein Läutersystem in Kombination mit dem Mühlensystem;
• Parameter betreffend das Würzeaufheizsystem: Innenkocher, Außenkocher, Heißhaltevorrichtung; Umpumpen beim Aufheizen auf dem Weg ins Kochgefäß, Zeit, Temperatur, Würzeparameter dabei: pH-Wert, Stammwürzgehalt, pH-Wert, Magnesium-Gehalt, Eiweißgehalt;
• Parameter betreffend den zum Hopfen vorgesehenen Hopfen: Art des Hopfens, vorzugsweise Naturhopfen, Doldenhopfen, Hopfenpellets, vorzugsweise Hopfenpellets T45 oder Hopfenpellets T90, Hopfenextrakt, vorzugsweise CO₂-Extrakt oder Ethanolextrakt, Hopfenprodukte, vorzugsweise reduzierte oder vorisomerisierte Hopfenprodukte, α-Säure-Gehalt, Gehalt an Aromakomponenten, Ergebnisse von vorangegangenen Einzelanalysen, Lagerbedingungen;
• Parameter betreffend die Additive, vorzugsweise Zugabemenge, Konzentration in der Würze oder im Bier und/oder Art: Entschäumer, Mineralsäure, Mineralsalze, Carbonsäuren, rohstoffeigene Additive, Zucker, Farbebier, Hopfenharze;
• Parameter betreffend die Abtrennvorrichtung: Temperatur der Würze während der Klärung, Rastdauer, Klärungseffizienz oder Feststoffgehalt der Würze nach der Klärung, Änderung der Partikelfracht oder -messung, Hopfenzugabe während der Klärung.

10. Verwendung einer der nachfolgend aufgeführten Parameter oder einer nachfolgend aufgeführten Kombinationen von Parametern zur Bestimmung einer Hopfengabe, vorzugsweise zum Hopfen einer Würze oder eines Bieres, insbesondere in einem Verfahren zum Hopfen einer Würze oder eines Bieres:
• der pH-Wert der Würze und/oder des Bieres;
oder
• der pH-Wert der Würze und/oder des Bieres, und die Vorkochzeit/Vorheißhaltezeit/Kochzeit/Heißhaltezeit der Würze;
oder
• der pH-Wert der Würze und/oder des Bieres, und der Stammwürzegehalt der Würze;
oder
• der pH-Wert der Würze und/oder des Bieres, und die Vorkochzeit/Vorheißhaltezeit/Kochzeit/Heißhaltezeit der Würze; und der Stammwürzegehalt der Würze;
oder
• der pH-Wert der Würze und/oder des Bieres, und die Vorkochzeit/Vorheißhaltezeit/Kochzeit/Heißhaltezeit der Würze, und der Stammwürzegehalt der Würze; und die Magnesiumkonzentration der Würze.

11. Verwendung einer der nachfolgend aufgeführten Parameter oder einer nachfolgend aufgeführten Kombinationen von Parametern zur Bestimmung einer Hopfengabe, vorzugsweise zum Hopfen einer Würze oder eines Bieres, insbesondere in einem Verfahren zum Hopfen einer Würze oder eines Bieres:
• die α-Säure-Dosage zur Würze und/oder zum Bier;
oder
• die α-Säure-Dosage zur Würze und/oder zum Bier, und der Stammwürzegehalt der Würze;
oder
• die α-Säure-Dosage zur Würze und/oder zum Bier, und der Stammwürzegehalt der Würze, und der pH-Wert der Würze und/oder des Bieres;
oder
• die α-Säure-Dosage zur Würze und/oder zum Bier, und der Stammwürzegehalt der Würze, und der pH-Wert der Würze und/oder des Bieres; und die Vorkochzeit/Vorheißhaltezeit/Kochzeit/Heißhaltezeit der Würze.

12. Verwendung des nachfolgend aufgeführten Parameters oder der nachfolgend aufgeführten Kombination von Parametern zur Bestimmung einer Hopfengabe, vorzugsweise zum Hopfen einer Würze oder eines Bieres, insbesondere in einem Verfahren zum Hopfen einer Würze oder eines Bieres:
• der pH-Wert der Würze und/oder des Bieres;
oder
• der pH-Wert der Würze und/oder des Bieres; und der Stammwürzegehalt der Würze.

13. Verwendung einer der nachfolgend aufgeführten Parameter oder einer nachfolgend aufgeführten Kombinationen von Parametern zur Bestimmung einer Hopfengabe, vorzugsweise zum Hopfen einer Würze oder eines Bieres, insbesondere in einem Verfahren zum Hopfen einer Würze oder eines Bieres:
• die α-Säure-Dosage zur Würze und/oder zum Bier;
oder
• die α-Säure-Dosage zur Würze und/oder zum Bier, und der Stammwürzegehalt der Würze;
oder
• die α-Säure-Dosage zur Würze und/oder zum Bier, und der Stammwürzegehalt der Würze, und der pH-Wert der Würze und/oder des Bieres;
oder
• die α-Säure-Dosage zur Würze und/oder zum Bier, und der Stammwürzegehalt der Würze, und der pH-Wert der Würze und/oder des Bieres, und die Vorkochzeit/Vorheißhaltezeit/Kochzeit/Heißhaltezeit der Würze.

14. Verwendung von Algorithmen auf Basis von maschinellem Lernen, automatisiertem maschinellen Lernen, neuronalen Netzen, künstlicher Intelligenz, deep learning, Fuzzy Logic, Case-based Reasoning (Fall-basiertes Schließen), Maximum-Likelihood-Methode, DDPG (deterministic policy gradient), A3C-LSTM (long-short term memory) oder dergleichen zur Bestimmung einer Hopfengabe unter Berücksichtigung wenigstens einer der nachfolgend aufgeführten Parameter oder einer Kombinationen der nachfolgend aufgeführten Parametern:
• Parameter betreffend das zur Herstellung der Würze oder des Bieres verwendete Brauwasser: pH-Wert, Leitfähigkeit, Calcium, Calciumhärte, Magnesium, Magnesiumhärte, Carbonathärte, Nichtcarbonathärte, Gesamthärte, Restalkalität;
• Parameter betreffend das zur Herstellung der Würze oder des Bieres verwendete Malz: Viskosität, Wassergehalt, Extrakt Feinschrot lufttrocken, Extrakt Feinschrot Trockensubstanz, Friabilimeter mehlig, Friabilimeter ganzglasig, Würze pH, Verzuckerung, Hartong VZ T45°C, Eiweißgehalt;
• Parameter betreffend die zur Isomerisierung oder zur Hopfung vorgesehene Würze: pH-Wert, Stammwürzegehalt, Volumen der Würze, Masse des Hopfenproduktes, freier Amino-N, gesamtlöslicher N, koagulierbarer N, Magnesium, Calcium, Polyphenole, Verdampfungsziffer, Partikelgrößenverteilung (Medianwert), Feststoffgehalt, Partikelfracht, Trübung, Gesamtpolyphenole, magnesiumsulfatfällbarer Stickstoff; löslicher Stickstoff, Proteingehalt, , Kolbachzahl, Schrotsortierung, Thiobarbitursäurezahl, Dimethylsulfid, Dimethylsulfid-Vorläufer, β-Glucan, Anthocyanogene, Zink, Oxalat, Mangan, Vorkoch-/Vorheißhaltezeit, Kochzeit, Heißhaltezeit;
• Parameter betreffend das Läutersystem: Maischefilter oder Läuterbottich oder Drehscheibenfiltration; ein Läutersystem in Kombination mit dem Mühlensystem;
• Parameter betreffend das Würzeaufheizsystem: Innenkocher, Außenkocher, Heißhaltevorrichtung; Umpumpen beim Aufheizen auf dem Weg ins Kochgefäß, Zeit, Temperatur, Würzeparameter dabei: pH-Wert, Stammwürzgehalt, pH-Wert, Magnesium-Gehalt, Eiweißgehalt;
• Parameter betreffend den zum Hopfen vorgesehenen Hopfen: Art des Hopfens, vorzugsweise Naturhopfen, Doldenhopfen, Hopfenpellets, vorzugsweise Hopfenpellets T45 oder Hopfenpellets T90, Hopfenextrakt, vorzugsweise CO₂-Extrakt oder Ethanolextrakt, Hopfenprodukte, vorzugsweise reduzierte oder vorisomerisierte Hopfenprodukte, α-Säure-Gehalt, Gehalt an Aromakomponenten, Ergebnisse von vorangegangenen Einzelanalysen, Lagerbedingungen;
• Parameter betreffend die Additive, vorzugsweise Zugabemenge, Konzentration in der Würze oder im Bier und/oder Art: Entschäumer, Mineralsäure, Mineralsalze, Carbonsäuren, rohstoffeigene Additive, Zucker, Farbebier, Hopfenharze;
• Parameter betreffend die Abtrennvorrichtung: Temperatur der Würze während der Klärung, Rastdauer, Klärungseffizienz oder Feststoffgehalt der Würze nach der Klärung, Änderung der Partikelfracht oder -messung, Hopfenzugabe während der Klärung.

15. Steuer- oder Regelvorrichtung (S), aufweisend:
wenigstens eine Erfassungseinrichtung (E) zum Erfassen wenigstens eines der nachfolgend aufgeführten Parameter:
• Parameter betreffend das zur Herstellung der Würze oder des Bieres verwendete Brauwasser: pH-Wert, Leitfähigkeit, Calcium, Calciumhärte, Magnesium, Magnesiumhärte, Carbonathärte, Nichtcarbonathärte, Gesamthärte, Restalkalität;
• Parameter betreffend das zur Herstellung der Würze oder des Bieres verwendete Malz: Viskosität, Wassergehalt, Extrakt Feinschrot lufttrocken, Extrakt Feinschrot Trockensubstanz, Friabilimeter mehlig, Friabilimeter ganzglasig, Würze pH, Verzuckerung, Hartong VZ T45°C, Eiweißgehalt;
• Parameter betreffend die zur Isomerisierung oder zur Hopfung vorgesehene Würze: pH-Wert, Stammwürzegehalt, Volumen der Würze, Masse des Hopfenproduktes, freier Amino-N, gesamtlöslicher N, koagulierbarer N, Magnesium, Calcium, Polyphenole, Verdampfungsziffer, Partikelgrößenverteilung (Medianwert), Feststoffgehalt, Partikelfracht, Trübung, Gesamtpolyphenole, magnesiumsulfatfällbarer Stickstoff; löslicher Stickstoff, Proteingehalt, , Kolbachzahl, Schrotsortierung, Thiobarbitursäurezahl, Dimethylsulfid, Dimethylsulfid-Vorläufer, β-Glucan, Anthocyanogene, Zink, Oxalat, Mangan, Vorkoch-/Vorheißhaltezeit, Kochzeit, Heißhaltezeit;
• Parameter betreffend das Läutersystem: Maischefilter oder Läuterbottich oder Drehscheibenfiltration; ein Läutersystem in Kombination mit dem Mühlensystem;
• Parameter betreffend das Würzeaufheizsystem: Innenkocher, Außenkocher, Heißhaltevorrichtung; Umpumpen beim Aufheizen auf dem Weg ins Kochgefäß, Zeit, Temperatur, Würzeparameter dabei: pH-Wert, Stammwürzgehalt, pH-Wert, Magnesium-Gehalt, Eiweißgehalt;
• Parameter betreffend den zum Hopfen vorgesehenen Hopfen: Art des Hopfens, vorzugsweise Naturhopfen, Doldenhopfen, Hopfenpellets, vorzugsweise Hopfenpellets T45 oder Hopfenpellets T90, Hopfenextrakt, vorzugsweise CO2-Extrakt oder Ethanolextrakt, Hopfenprodukte, vorzugsweise reduzierte oder vorisomerisierte Hopfenprodukte, α-Säure-Gehalt, Gehalt an Aromakomponenten, Ergebnisse von vorangegangenen Einzelanalysen, Lagerbedingungen;
• Parameter betreffend die Additive, vorzugsweise Zugabemenge, Konzentration in der Würze oder im Bier und/oder Art: Entschäumer, Mineralsäure, Mineralsalze, Carbonsäuren, rohstoffeigene Additive, Zucker, Farbebier, Hopfenharze;
• Parameter betreffend die Abtrennvorrichtung: Temperatur der Würze während der Klärung, Rastdauer, Klärungseffizienz oder Feststoffgehalt der Würze nach der Klärung, Änderung der Partikelfracht oder -messung, Hopfenzugabe während der Klärung;
wenigstens eine Recheneinrichtung (C), welche hergerichtet, konfiguriert oder geeignet ist, die Hopfengabe unter Berücksichtigung des wenigstens einen Parameters, welcher mittels der Erfassungseinrichtung (E) erfasst worden ist, unter Einsatz von Algorithmen auf Basis von maschinellem Lernen, automatisiertem maschinellen Lernen, neuronalen Netzen, künstlicher Intelligenz, deep learning, Fuzzy Logic, Case-based Reasoning (Fall-basiertes Schließen), Maximum-Likelihood-Methode, DDPG (deterministic policy gradient), A3C-LSTM (long-short term memory) oder dergleichen zu bestimmen; und
vorzugsweise wenigstens eine Ausgabeeinrichtung (A), welche hergerichtet, konfiguriert oder geeignet ist, die von der Recheneinrichtung (C) bestimmte Hopfengabe an einen Nutzer und/oder an ein technisches System, vorzugsweise eine Sudhaussteuerung oder eine Brauanlage, auszugeben.

16. Steuer- oder Regelvorrichtung (S) nach Anspruch 15, **dadurch gekennzeichnet, dass** die Recheneinrichtung (C) hergerichtet, konfiguriert oder geeignet ist, die Hopfengabe unter Berücksichtigung eines der nachfolgend aufgeführten Parameter oder einer der nachfolgend aufgeführten Kombinationen von Parametern zu bestimmen:
• der pH-Wert der Würze und/oder des Bieres;
oder
• der pH-Wert der Würze und/oder des Bieres, und die Kochzeit/Heißhaltezeit der Würze;
oder
• der pH-Wert der Würze und/oder des Bieres, und der Stammwürzegehalt der Würze;
oder
• der pH-Wert der Würze und/oder des Bieres, und die Kochzeit/Heißhaltezeit der Würze, und der Stammwürzegehalt der Würze;
oder
• der pH-Wert der Würze und/oder des Bieres, und die Kochzeit/Heißhaltezeit der Würze, und der Stammwürzegehalt der Würze, und die Magnesiumkonzentration der Würze;
oder
• die α-Säure-Dosage zur Würze und/oder zum Bier;
oder
• die α-Säure-Dosage zur Würze und/oder zum Bier, und der Stammwürzegehalt der Würze;
oder
• die α-Säure-Dosage zur Würze und/oder zum Bier, und der Stammwürzegehalt der Würze, und der pH-Wert der Würze und/oder des Bieres;
oder
• die α-Säure-Dosage zur Würze und/oder zum Bier, und der Stammwürzegehalt der Würze, und der pH-Wert der Würze und/oder des Bieres, und die Kochzeit/Heißhaltezeit der Würze;
oder
• der pH-Wert der Würze und/oder des Bieres, und der Stammwürzegehalt der Würze.

17. Steuer- oder Regelvorrichtung (S) nach Anspruch 15 und 16, **dadurch gekennzeichnet, dass** die Steuer- oder Regelvorrichtung (S) ferner eine Datenbank (B) aufweist,
wobei die Datenbank (B) zum Sammeln und Speichern von Daten geeignet ist; und/oder dass die Steuer- oder Regelvorrichtung (S) ein selbstlernendes System ist; und/oder
dass die Steuer- oder Regelvorrichtung (S) geeignet ist, zu einem früheren Zeitpunkt erfasste, bestimmte und/oder ausgegebene Daten bei der Bestimmung der Hopfengabe zu berücksichtigen.

18. Steuer- oder Regelvorrichtung (S), vorzugsweise nach wenigstens einem der Ansprüche 15 bis 17, hergerichtet oder geeignet zur Durchführung des Verfahrens nach wenigstens einem der Ansprüche 1 bis 7.
